# EUROPEAN PATENT APPLICATION

(11) **EP 4 664 380 A1**
(43) Date of publication of application: **17.12.2025**
(21) Application number: 25181985.0
(22) Date of filing: 11.06.2025
(51) Int. Cl.: G06Q 30/0601, G06F 113/12

(54) **SYSTEMS AND METHOD FOR ORGANIZING, SEARCHING AND DISPLAYING A KNIT FABRIC**

(30) Priority: 13.06.2024 US 202463659703 P
(71) Applicant: Black Swan Textiles, Oxford, OH 45056 (US)
(72) Inventor: HOOVER, Keith, Oxford, Ohio, 45056 (US)
(74) Representative: Meissner Bolte Partnerschaft mbB

(57) **Abstract**

Systems and methods are discussed herein and include a method of providing for search and review of an electronic database of knit fabric samples, the method including: providing a plurality of digital images of a plurality of knit fabrics; organizing the plurality of digital images in the database based upon corresponding visual cues extracted using an image analysis performed on each of the plurality of digital images, wherein the visual cues are construction attributes of the plurality of knit fabrics; displaying one or more of the plurality of digital images for review; and providing for search of the database using one or more of the visual cues.

## Description

### CLAIM OF PRIORITY

This application claims the benefit of the filing date of U.S. Provisional Patent Application Serial No. 63/659,703, filed June 13, 2024 entitled, "SYSTEMS AND METHOD FOR ORGANIZING, SEARCHING AND DISPLAYING A KNIT FABRIC," which application is incorporated by reference herein in its entirety.

### FIELD OF THE DISCLOSURE

The present disclosure relates generally to textile manufacturing and to computer analysis for better understanding of the relationship between construction parameters and the visual appearance of knit fabrics. More specifically, the present disclosure relates to an electronic interface for determining, recognizing, and classifying differences in visual appearance of knit fabrics based upon their construction from samples stored in an electronic database using one or more visual cues.

### BACKGROUND

In the textile industry, the ability to efficiently search and reproduce fabric designs is crucial for fabric mills and designers. Clothing designers and mills (manufacturers) typically rely on fabric samples of materials in order to make product selections. In some cases rudimentary data such as image files of stitch patterns are also relied upon. In some cases, clothing designers may be presented with and inspired by a particular fabric for use in creating a garment. However, it is often difficult for the designer to collaborate with others when samples are not readily available to the designer and the other collaborators.

In a typical design environment, actual physical samples of materials are held in sample books or a library. When a particular sample is needed, the sample is identified and samples are physically circulated for discussion. This makes it difficult for designers at separate locations to work collaboratively, particularly with those who may be at remote locations.

Further, while textile manufacturers may provide basic information such as the color, generic construction tags, fabric type and elements used to create a material, this information often lacks the specificity that a designer or even the manufacturer may need in the future to produce or reproduce the fabric.

### SUMMARY

Conventional methods of organizing fabric data often do not allow for easy searching, organizing or matching of fabrics with similar construction characteristics. This can lead to inefficiencies in fabric design and production as unnecessary trial and error or excessive collaboration must be used to determine the construction of a fabric. The present inventors have recognized systems and methods that utilize image recognition and optionally artificial intelligence (AI), among other techniques. These systems and methods are used to create a user interface and a database that can greatly improve the way knit fabric is categorized and searched. This interface can enhance the searchability and reproducibility of fabric designs for both designers and mills.

As disclosed herein, systems and methods are provided that enable a digital image or digital images (e.g., front image and back image) to be captured from a fabric sample. A large number of digital images representative of a large number of knit fabrics of different constructions can be organized in the database and various analytics can be performed on the database allowing for categorizing (and searching) of fabrics by shared or similar "visual cues". These visual cues are construction attributes of the knit fabric including but not limited to include detailed descriptions of overall appearance, texture, pattern, and structural characteristics on both macro and micro scales. These visual cues go beyond basic rudimentary data that are knit parameters such as threads or yarn used in the fabric and the particular stitch type, weave, or knit of the fabric but include additional construction attribute(s) as further discussed herein in greater detail.

According to one example, the database can be an AI-enhanced database that organizes fabrics based on a wide range of construction attributes that are automatically generated and assigned by the AI such as running one or more machine learning modules. New materials and fabrics can be analyzed and stored to grow the database to cover a multiplicity of fabrics. According to further examples, the system includes a visual browser interface that displays images of fabrics and allows users to filter and search the database using search criteria such as or related to the visual cues (the construction attributes). The interface also supports detailed viewing of fabric and data related to the fabric including detailed image(s) of the fabric, review of various analytics related to the fabric. The interface facilitates easy selection and ordering of fabric samples, making it a powerful tool for fabric mills and designers. The interface can be accessible at any internet accessible location where it can be used by designers or mills as a resource in fabric search and selection.

Those of skill in the art upon reading and understanding the teachings provided herein will appreciate that several other uses of a digital collection of build specifications can be used for a number of additional applications.

### BRIEF DESCRIPTION OF THE FIGURES

In the drawings, which are not necessarily drawn to scale, like numerals can describe similar components in different views. Like numerals having different letter suffixes can represent different instances of similar components. The drawings illustrate generally, by way of example, but not by way of limitation, various embodiments discussed in the present document.
FIG. 1 shows an example textile environment according to at least one embodiment of this disclosure.
FIG. 2 shows a method according to at least one embodiment of this disclosure.
FIG. 3 shows an example system according to at least one embodiment of this disclosure.
FIGS. 4-4Q shows an example graphical user interface with various demonstrated functionalities and capabilities for organizing, displaying and searching fabric data according to at least one embodiment of this disclosure.
FIG. 5A-5F show examples of a graphical user interface with a fabric detail that results from clicking on a digital image of one of the fabrics of the graphical user interface of FIGS. 4-4Q according to at least one embodiment of this disclosure.
FIGS. 6A-6G show various additional search features/capabilities and additional filtering functions of the graphical user interface 400 discussed previously with regard to FIGS. 4-4Q according to at least one embodiment of this disclosure.
FIG. 7 shows a process flow according to at least one embodiment of this disclosure.
FIG. 8 shows a system according to at least one embodiment of this disclosure.
FIG. 9 shows two digital images of two fabrics having different complexity scores according to at least one embodiment of this disclosure.
FIGS. 10A and 10B are digital images of a front and a back of the same fabric sample with identified and assigned visual cues according to at least one embodiment of this disclosure.
FIG. 11 show various digital images with a plurality of visual cues identified and assigned thereto according to at least one embodiment of this disclosure.
FIG. 12A shows a table comprising a chart of questions used in identifying visual cues for a front of a fabric according to at least one embodiment of this disclosure.
FIG. 12B shows a table comprising a chart of questions used in identifying visual cues for a back of a fabric according to at least one embodiment of this disclosure.
FIGS. 13-13B shows digital images with various examples of visual clues identified according to at least one embodiment of this disclosure.
FIG. 14 shows a schematic of a computing device consistent with at least one embodiment of this disclosure.

Corresponding reference characters indicate corresponding parts throughout the several views. The exemplifications set out herein illustrate exemplary embodiments of the disclosure, and such exemplifications are not to be construed as limiting the scope of the disclosure any manner.

### DETAILED DESCRIPTION

As disclosed herein, knit fabrics may be analyzed to determine their construction attributes including those construction attributes that effect or influence the overall appearance and other construction attributes of the knit fabric. More specifically, knit fabrics samples may be digitized and decoded to assign visual cues that are the construction attributes of the knit fabrics. This digitization allows for improved database organization facilitating improved searching, displaying, inventorying, production history, fabric replication, collaboration and order processing, among other benefits. Improved displaying includes improved display of the appearance of the knit fabric and displaying groups of knit fabrics having a similar appearance due to same or similar visual cues.

The analysis discussed herein provides further details of fabric construction (called construction attributes herein) beyond those captured by rudimentary data that are knit parameters such as threads or yarn used in the fabric, grams per square meter, wales per inch, courses per inch and the particular stitch type, weave, or knit and stitch pattern of the fabric but include additional construction attribute(s). The construction attributes allow for designers, fabric mills or fabric converters to replicate desired fabrics quickly to meet customer needs, organize fabric portfolios and track production, among other benefits. Thus, the systems and methods disclosed herein may allow for the generation of accurate and useful fabric data that can be used in a variety of platforms.

As disclosed herein, digital image processing technology may be used in the evaluation of construction attributes of knit fabric to allow for the extraction of digital cues for use in reproducing the fabric in the future at any suitable manufacturing location. According to at least one example disclosed herein, the systems and methods may be used to extract construction attributes of fabric using optical, digital, and/or other automated inspection technologies. In one example, the systems and methods disclosed herein may digitize specific construction attributes, which may include, but are not limited to, overall appearance, hand, drape, performance including one or more but not limited to durability, fit stability and surface appearance, previous color(s) used, manufacturing terminology, manufacturing location, indication of front or back, a fabric color, a manufacturer assigned tag, a fabric texture and color, a fabric structure at a macroscale that provides a pattern, a column width, a column prominence, a row prominence, a shape structure on a microscale, one or more knit parameters, fiber content, machine callout, wales per inch, thickness, grams per square meter, courses per inch, courses to wales ratio, indication of single knit or double knit, color appearance class, production history, pattern data for circular knit machine setting, fiber data, haptic data including one or more of but not limited to softness data front, softness data back, flex front, flex back, roughness front and roughness back. The systems and methods disclosed herein may digitalize fabric data to create processes and applications to better identify, manage, and leverage fabric assets.

Fabric development remains a tedious and expensive endeavor. Fabric mills often spend a great deal of time and money developing fabrics for sale to apparel brands. One path for fabric development requires mills (or suppliers) to show a wide range of fabrics at "fabric fairs" sponsored either by apparel brands or regional trade shows. Considerable mill development time, travel, and countless suitcases of "fabric inspirations" are required to meet this constant demand for "newness." With little or no direction from the brands, fabric fairs usually deliver a low adoption rate.

A second path for fabric development involves responding to requests from brands to develop fabrics based on inspirational samples. Generally, the request is for something like the sample provided by a potential customer - but always with a key difference (related to cost or one of the fabric attributes) that is difficult to achieve. Brands may initiate the same development with several mills to increase the chances of getting a fabric approved before the calendar deadline.

As mills and apparel brands adopt digitizing their fabrics using the systems and methods disclosed herein, each may be able to construct digital libraries of fabric data, such as a cloud-based searchable repository of fabric characteristics and construction specifications.

To replace the first development path, mills may upload their digitized fabric library making it accessible by apparel brands seeking fabrics. This strategy converts the mill liabilities associated with general fabric research and development (R&D) to an online menu asset that can generate fabric orders. An apparel brand user can search the mill's digital fabric assets by visual cues to find fabric candidates that are suitable for use in garments under development or that have been produced previously. For example, an apparel brand user can search the mill's digital fabric assets and place orders for samples using the systems and methods discussed herein. In addition, mills can use the systems and methods discussed herein a repository tracking production runs, previous fabric design and other pertinent information.

As an alternate to initiating requests in the second development path, apparel brands may digitize their inspirational samples and search a database for production-ready fabrics that meet pre-defined requirements from member mills. Thus, rather than initiating a new development, the designer may review existing mill fabrics that meet the desired requirements. If no suitable fabrics are found, the fabric data file may be sent to the preferred mill as a manufacturing-ready standard. The unique digital fabric standard may provide mills with the specific information needed to replicate unidentified inspiration swatches.

Selecting fabrics from digitized database of fabrics may diminish risks for both the apparel brands and mills. Selecting known fabrics with a production history may be better than developing new fabrics with no historical data on runnability or quality. With this insight into known fabrics, the ability to adopt the right fabrics is not constrained by time or the size of an apparel brand fabric development team.

Consistent with at least one example of this disclosure, the systems and methods disclosed herein may provide construction attributes to a mill with sufficient detail to allow for manufacture of the fabric without excessive trial and error or collaboration. The construction attribute information objectively specifies knit parameters including the yarns, machine settings, and finishing parameters required to make the fabric but additionally presents further data including visual data in sufficient detail to allow for efficient review and selection of fabric without the need for production of an unnecessary number of samples. In this manner, the mill can proceed straight to production with a new fabric as if it were an existing mill article with a production history, bypassing the conventional development process.

The above discussion is intended to provide an overview of subject matter of the present patent application. It is not intended to provide an exclusive or exhaustive explanation of the invention. The description below is included to provide further information about the present patent application.

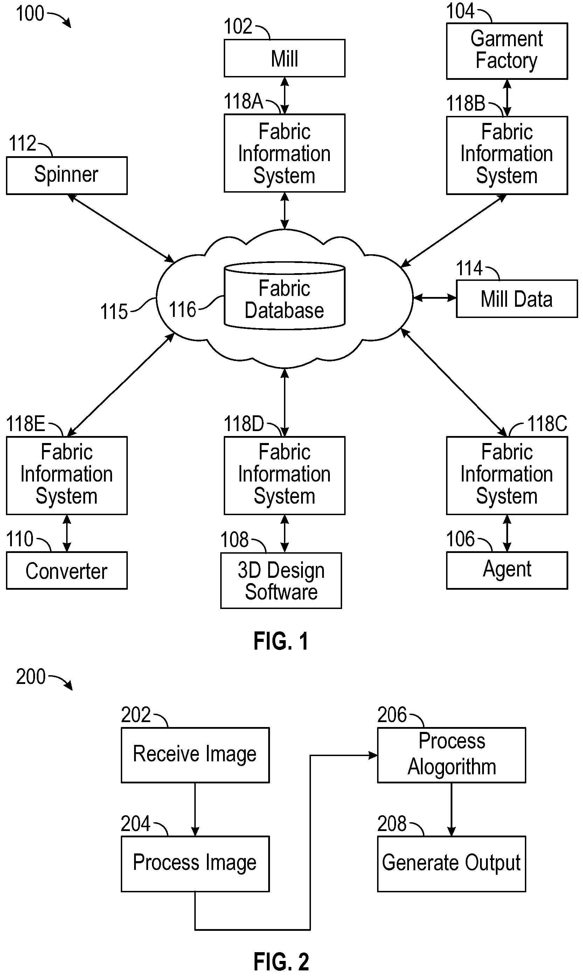

FIG. 1 shows an example schematic of a textile environment 100 consistent with at least one embodiment of this disclosure. Textile environment 100 may include a textile mill 102, a garment factory 104, a textile sales agent 106, design software producers 108, textile converters 110, and spinners 112. In this example, each entity may access centralized mill data 114, such as contained in a cloud-based repository 115 of textile data. According to some examples disclosed herein, mill data 114 and/or other fabric data such as from fabric information systems 118A, 118B, 118C, 118D, and 118E may be stored in a fabric database 116 as described in greater detail herein.

Embodiments disclosed herein include fabric information systems (labeled individually as fabric information systems 118A, 118B, 118C, 118D, and 118E), which may be accessed, for example, by mills 102, garment factories 104, agents 106, design software producers 108, and textile converters 110. As disclosed herein, fabric information systems 118A, 118B, 118C, 118D, and 118E may digitize construction attributes of a textile material sample, thus creating a model (referred to herein simply as an interface) suitable for both design and manufacturing end-users. These construction attributes, can include, but are not limited to: overall appearance, hand, drape, performance including one or more but not limited to durability, fit stability and surface appearance, previous color(s) used, manufacturing terminology, manufacturing location, indication of front or back, a fabric color, a manufacturer assigned tag, a fabric texture and color, a fabric structure at a macroscale that provides a pattern, a column width, a column prominence, a row prominence, a shape structure on a microscale, one or more knit parameters, fiber content, machine callout, wales per inch, thickness, grams per square meter, courses per inch, courses to wales ratio, indication of single knit or double knit, color appearance class, production history, pattern data for circular knit machine setting, fiber data, haptic data including one or more of but not limited to softness data front, softness data back, flex front, flex back, roughness front and roughness back.

The overall appearance of the fabric may be important to garment designers and purchasers because it is a simple way to classify different fabrics. However, previously objectively identifying different fabrics has been a challenge in the industry. Typically, brands assign marketing names to fabrics. These names may be unique to each brand and rarely bear any relationship to fabric types or manufacturing processes. Some basic fabric classifications like "knit" and "woven" may be used, but these generic terms may be inadequate to differentiate the multitude of fabric variations in the marketplace. Several attempts have been made to use a combination of manufacturing and marketing terms as identifiers, but none has been successful - there are just too many variations. So, a lack of a "common language" to identify fabric presents obstacles both within the brands and across the supply chain.

The systems and methods disclosed herein, address these limitations. First, they capture a high-resolution image of both sides of the fabric. These images may capture a visual appearance of the fabric sample. Use of fabric database 116 that is commonly shared allows fabric information systems 118A, 118B, 118C, 118D, and 118E to be use common evaluation base with the images organized around visual cues. In this manner a master part code, a common naming convention, a master part identifier, a digital build specification, and/or a parent-child relationship is not needed.

Rather the present systems and methods use an image recognition algorithm that compares an image of a fabric to images of other fabrics using the visual cues. With the visual cues a multi-attribute search may be initiated that first identifies fabrics associated with one or more particular desired construction attribute(s). The search may be narrowed or widened to show relatively more similar or less similar fabric constructions. Conveniently, digital images from a plurality of fabrics (e.g., 9,800+ knit fabrics) have been collected, identified, located and organized in the database 116. These plurality of digital images can be searched via a search function and can be displayed for reference and other purposes.

To date, various factors (some discussed above) have weighed against easy reproduction of various construction attributes including, but not limited to overall appearance, hand, drape and performance.

Fabric developers and designers acknowledge that hand is an important fabric attribute. Yet, determining or communicating information related to hand is extremely confusing since no objective method or vocabulary exists to support a development/assessment process. While many attempts have been made to model hand, there is no industry-accepted, commercially viable process to objectively characterize hand - largely because it is not understood. Fabric information systems 118 may digitize a fabric sample for the database 116 and the resulting data may be used to assign hand ratings via haptic data to individual fabrics. The hand rating may be saved as part of the digital build specification to allow an additional input by a user to search fabric database 116. Thus, the systems and methods disclosed herein may allow for multiple different hand analysis schemes or a common analysis scheme based upon objective haptic data such as data collected from a haptic device. Fabric data may be included in the database 116 of digital fabrics that can be searched to find fabrics with similar hand ratings to a given sample or hand value.

Fabric developers and designers recognize that fabrics drape in given ways - especially based on the weight and grain - when incorporated into garments and placed over the body. A fabric's draping behavior may play a key role in the aesthetic appearance of a finished garment especially when multiple fabrics are combined in the same product. Three-dimensional apparel design software providers have attempted to digitize and model drape to drive their garment simulation capability, producing "physics files" for their software. However, there are several problems with the current methodologies that are addressed by the systems and methods disclosed herein. One problem involves time and cost. Typical 3D software providers support a process to test fabrics or enter test results for fabrics to create material-specific physics files. The testing process is time-consuming and expensive. Many apparel brands have fabric libraries in excess of 1,000 fabrics, so the cost and time of drape digitization presents a barrier to starting the 3D design process. As a way of avoiding this cost, brands have asked mills to take on the cost and time required for drape digitization. Most mills have refused since they see no value in taking on this task.

The second problem involves inaccuracy. Current 3D software providers include a library of generic digital fabrics with associated physics properties. This allows the user to design garments without incurring the burden of manual digitization. With that convenience comes inaccuracy. Selecting a generic fabric is strictly guesswork since there is no way provided to determine the closest generic match to a specific fabric. The software packages also allow the user to change the values associated with the physics file for a given fabric (both for fabrics that were actually digitized and for generic versions from the library). Adjusting these numbers often relies on guesswork. Designers adjust physics values to improve the aesthetic of the virtual design, not to improve the correlation of the virtual fabric to the actual fabric. So, the behavior of the virtual garment design loses correlation to that of a physical counterpart. This ultimately leads to supply chain problems when production garments do not look like the original 3D designs.

The third problem is the lack of standardization. Although many models are based on KES (the Kawabata Evaluation System), each software provider adds (or excludes) specific tests and applies hidden proprietary code in their program that changes how the test results model fabric behavior in 3D. So, if a brand wants to use multiple 3D design systems, they must re-digitize each fabric for each additional system, thus multiplying the time and cost of digitizing drape.

The fourth problem is a lack of correlation with physical samples. Since each 3D software provider models drape differently, it follows that the same garment rendered in each solution would look different from the others - and from the physical sample that it was intended to represent. It remains to be seen if any 3D software can render drape uniformly and repeatably.

Fabric information systems 118A, 118B, 118C, 118D, and 118E may evaluate drape using existing drape models as well and those under development and this data can be stored in the database 116 for common usage. Thus, a large collection of fabrics with known constructions and finishes is digitized and gathered in the database 116. The resulting data may be used in a machine learning project to construct an algorithm to predict the physics of fabrics digitized using the fabric information systems 118A, 118B, 118C, 118D, and 118E based on their construction attributes. Thus, fabric information systems 118A, 118B, 118C, 118D, and 118E may generate a predictive drape file that can be used in conjunction with 3D design programs. For example, the predictive drape file may be a component of the digital build specification and used as an additional input by a user to search the database 116. Additionally, a user could search fabric database 116 for drape matches to a given sample or set of drape values by searching for build specification that result in a given drape based on the predictive drape file.

Characterizing fabric performance is a mature process utilizing standardized test methods from groups like the American Association of Textile Chemists and Colorists (AATCC) and the American Society for Testing and Materials (ASTM) to rate specific performance attributes such as stretch/recovery and burst strength. The conventional wisdom in the industry is to test a fabric to an end-use protocol for which a garment incorporating the fabric is intended. This approach limits a fabric to the end-use for which it was developed rather than identifying all end-uses for which the fabric might be suitable.

Within the model, end-use may be defined as the aggregation of performance factors that satisfy a wearer's needs in a given activity or situation. Activity-specific end-uses may be comprised of product features that allow a person to perform an activity within the requirements of the task at hand. These might be sports-related or work-related. Situation-specific end-uses require product features deemed desirable for some aspect of comfort. There is, of course, crossover between activity-specific and situation-specific end-uses. Situation-specific end-uses may be driven largely by the three sensory-related fabric attributes (e.g., appearance, hand, and drape) while activity-specific end-uses are driven by fabric attributes that define the underlying properties (e.g., performance, construction, and feasibility).

Performance factors determine a fabric's suitability to meet a wearer's particular need. These factors may be related to fabric features and functions and are associated with standardized tests. Given there is a population of all wearers' needs for each end-use and a corresponding population of all performance factors, there may be some sample or subset of performance factors that establish the minimum requirements for a particular wearer's need in that activity or situation. One factor to understanding when this overlap has occurred may be a mapping of all performance factors to at least one standardized test. Test results may objectively confirm the presence or absence of a factor and, if present, to what extent.

Overall product performance may be the aggregation of many performance factors acting in concert to meet an end-use. To optimize desired performance, tradeoffs may be required. For example, if warmth is achieved with a heavier fabric and light weight is a desired outcome, some conventional components and constructions may not be options for the envisioned product. To establish an end-use profile, performance factors may be identified, defined, and associated with at least one verification test.

Once established, an end-use testing protocol, that is, a specific solution set of performance factors and associated test methods, may be assigned to each end-use. Because each performance factor may be associated with at least one verification test, end-use certification may be achieved when product test results are acceptable for each verification test in the solution set. End-use certification may provide objective and demonstrable proof that a given product delivers the desired or claimed performance and allows the maker to offer a performance guarantee with confidence.

Although the apparel industry accepts the concept of performance factors and verification testing, many brands have not identified specific end-uses and those that have rarely agree on what performance factors and test methods should be associated with each end-use. This creates a problem for designers who select fabrics based purely on aesthetic or cost factors. Later in product development, they find that the desired fabrics will not pass required performance factor testing. It also creates a particular burden on mills, who must execute or pay for extensive redundant testing of the same material for different brands.

The systems and methods disclosed herein may include performance factors and test methods usable by end-use protocols that may be specified in the digital build specification. For example for the same fabric subjected to different tests may be given different performance factors that can be saved as part of the digital build specification to allow for searching based on different testing and the results of the testing. The aggregation of results from these tests may indicate end-uses for which a particular fabric qualifies. Each qualifying end-use may be associated with a fabric so that a digital library can be queried by end-use.

Mills often conduct internal testing on fabrics regardless of brand requirements. The results are stored on internal data systems. To populate the performance data in one embodiment of fabric information systems 118, the data associated with each test in fabric information systems 118A, 118B, 118C, 118D, and 118E and/or the database 116 may be associated with each fabric in a mill's library. Additionally, the mills may upload supplemental tests results not required to the database 116.

Construction requirements may include analyzing a fabric sample and deriving the information necessary to initiate the fabric manufacturing process, including raw materials identification (e.g., yarn and its subcomponents) and machine settings which can be specified in the digital build specification. The data making up those requirements may be organized in a way so that a database storing those records, such as the database 116, may be efficiently searched and accessed. For example, and as disclosed herein, the data making up the requirements may be stored in the digital build specification that is outputted based on search inputs extracted from an image of a fabric sample provided by the user.

FIG. 2 shows a method 200 according to at least one embodiment of this disclosure. Method 200 may begin at stage 202 wherein an image may be received, such as by a computing device. The image may be captured using a camera, scanner, or other image capturing techniques. In one example, a flatbed scanner may be used to provide sufficient image quality. Other examples may use other devices, such as smart phones as image capture devices.

The digital image may be of a front and/or back of a fabric sample. The digital image may be of an actual fabric or a simulated image that simulates the appearance of a modeled fabric. Each digital image may be processed 204 in one or more ways discussed in further detail subsequently to identify and assign the visual cues. Processing 204 can include evaluating or eliminating certain details as discussed United States Patent No. 11,847,842, the entire specification of which is incorporated herein by reference in its entirety. Raw image data may be preserved to support multiple analyses as disclosed herein. As disclosed herein, a variety of image formats may be utilized, including but not limited to .png, .jpg, .gif, .tif, etc.

Once an image has been received, the physical size and/or other physical characteristics of a fabric swatch may be determined. For example, the fabric swatch, via the received image, may be evaluated for yarn dimensions across multiple sampling locations. Using the dimensions across multiple locations, averages may be obtained to form an estimate of the swatch's physical dimensions. For example, the images may be resized so that a given pixel has a known physical dimension or images may be required to have a given resolution and be of a certain pixel count so that a pixel can be equated to a physical dimension. Other techniques such as including a reference object in the captured image that can be used to determine scale.

As one example, the image, or portion of the image being analyzed may be converted to greyscale and contours of the yarns and/or fabric identified based on color values changing. In another example, a reference image of a known stitch type and similar scale may be used for an image subtraction process. During the image subtraction process, the pixel values for the known image may be subtracted from the pixel values of the received images. If the resulting value for each pixel is within a given range, then the images may be considered similar.

Once the captured image data is processed, the image can be stored as part of a database (e.g., the database 116 of FIG. 1). Image data, along with other data, may be used as variables in mathematical formulae to determine various visual cues and as part of various search criteria as disclosed herein.

As disclosed herein, a large volume (e.g., hundreds) of digital images may be processed to build the process algorithm 206 that performs image analysis. Digital images of fabrics with a variety of yarn texture variations, pattern and pattern irregularity may be gathered and stored (e.g., in the database 116 of FIG. 1).

The captured digital images may be used for a machine learning training model of process algorithm(s) 206 as disclosed herein. Various approaches for process algorithm 206 to perform image analysis can be utilized as further detailed herein.

Once the various images have been used to generate the process algorithm 206, an output may be generated 208 and stored in the database (e.g., the database 116 of FIG. 1). For example, data such as the visual cues, model parameters, build sheets, etc. may be exported as a JSON or other data structure. The data structure may then be used across multiple platforms to allow fabric identification and searching as disclosed herein.

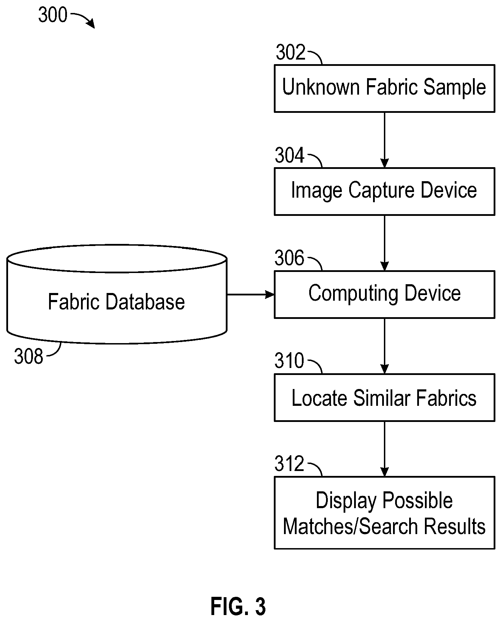

FIG. 3 shows a schematic of an example process flow 300 for replicating an unknown fabric sample 302 consistent with at least one embodiment of this disclosure. As shown in FIG. 3, process flow 300 may include capturing an image of unknown fabric sample 302 using an image capturing device 304. The captured image may include both images of both the front and back of unknown fabric sample 302. As disclosed herein, the captured image may be processed via a computing device 306. Computing device 306 may process the image to extract visual cues of unknown fabric sample 302 as disclosed herein. Using one or more the visual cues, computing device 306 may access a database 308 to locate similar fabrics 310 sharing similar or common visual cues and display 312 possible matches that are search results to the unknown fabric sample 302. Although the above example is described using the unknown fabric sample 302 analysis, it is contemplated that the systems and methods described herein need not be based upon an unknown fabric sample but could be based upon brand, color, yarn type, generic tag, certain aspects of the appearance or other attribute of a garment or fabric, prior production history, or simply a personal desire to design a garment.

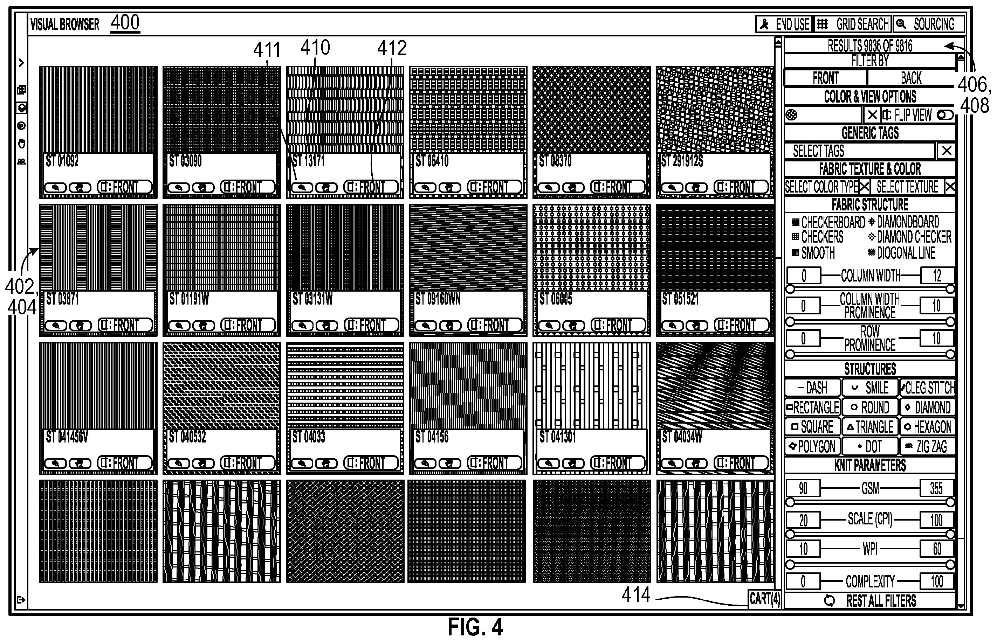

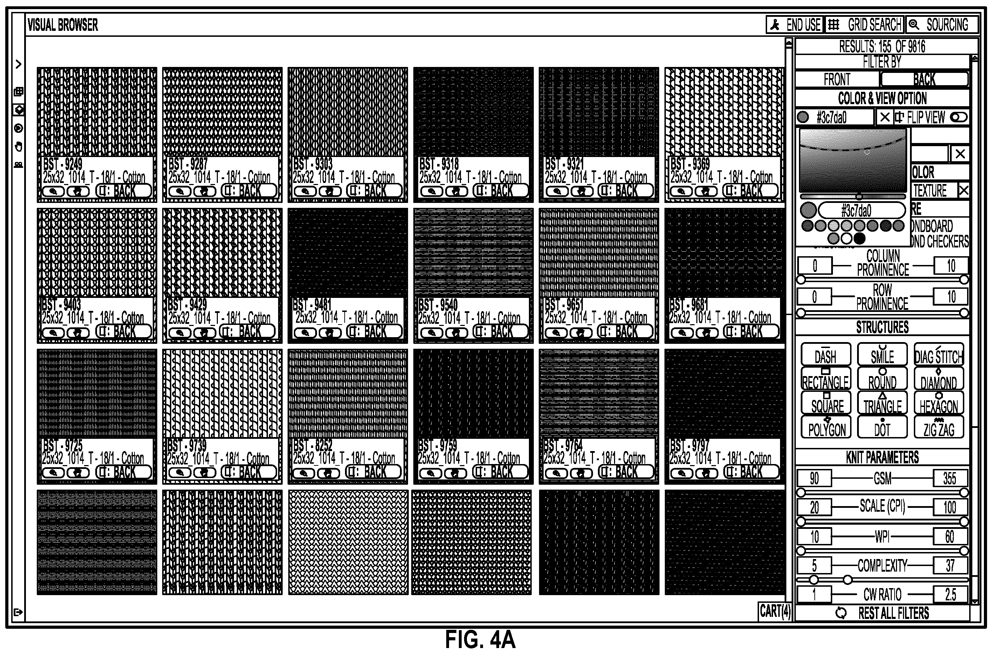

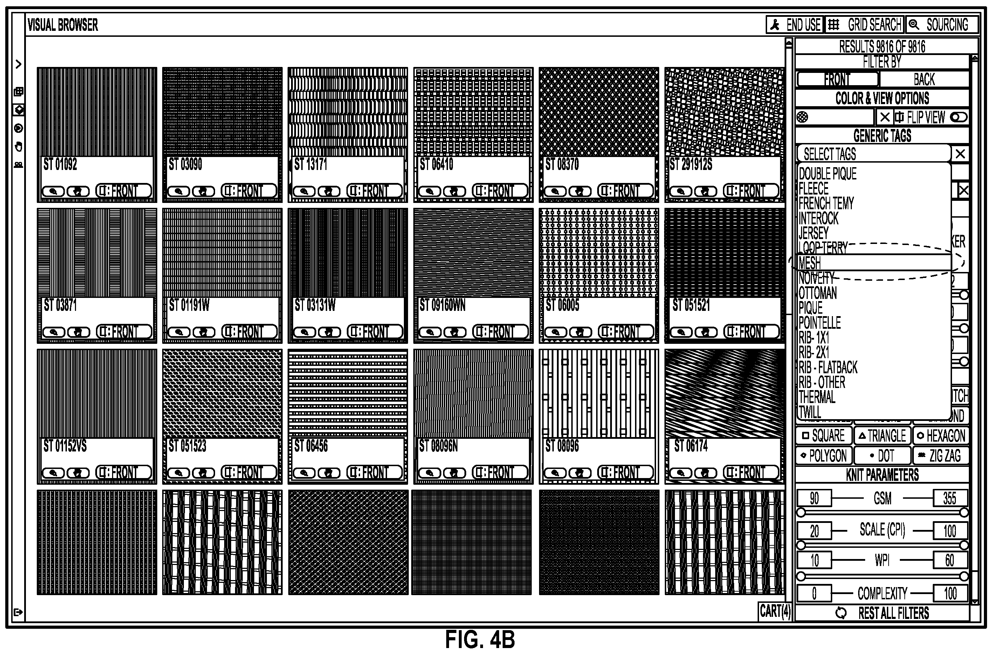

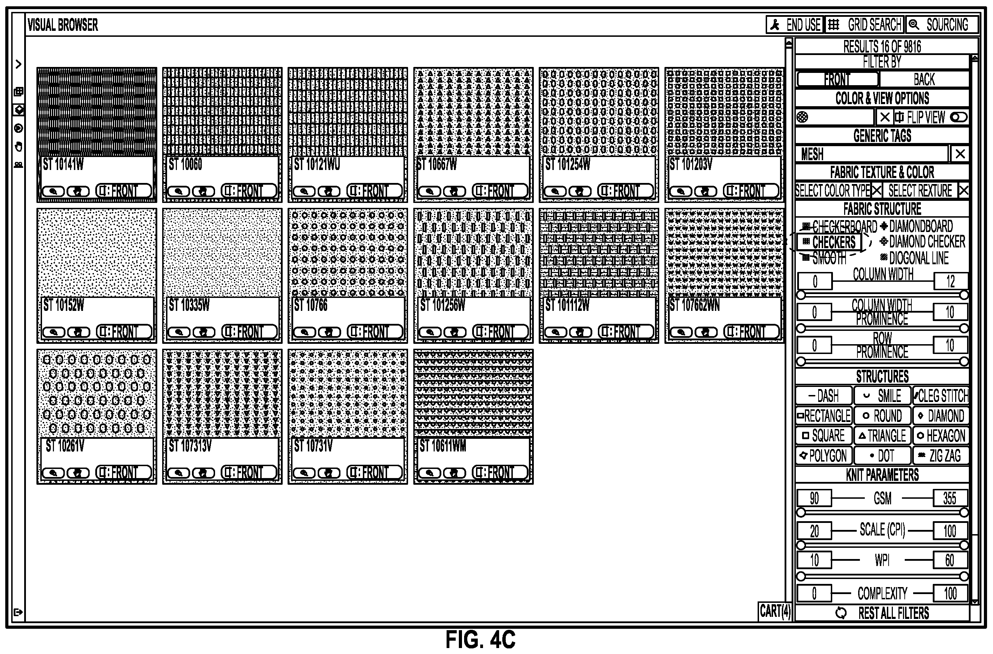

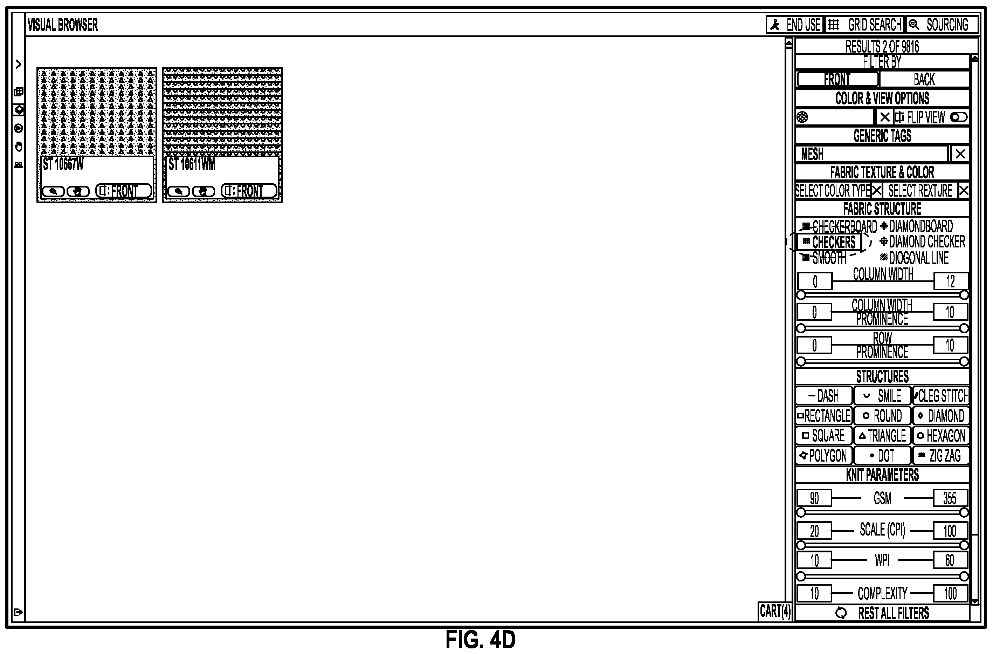

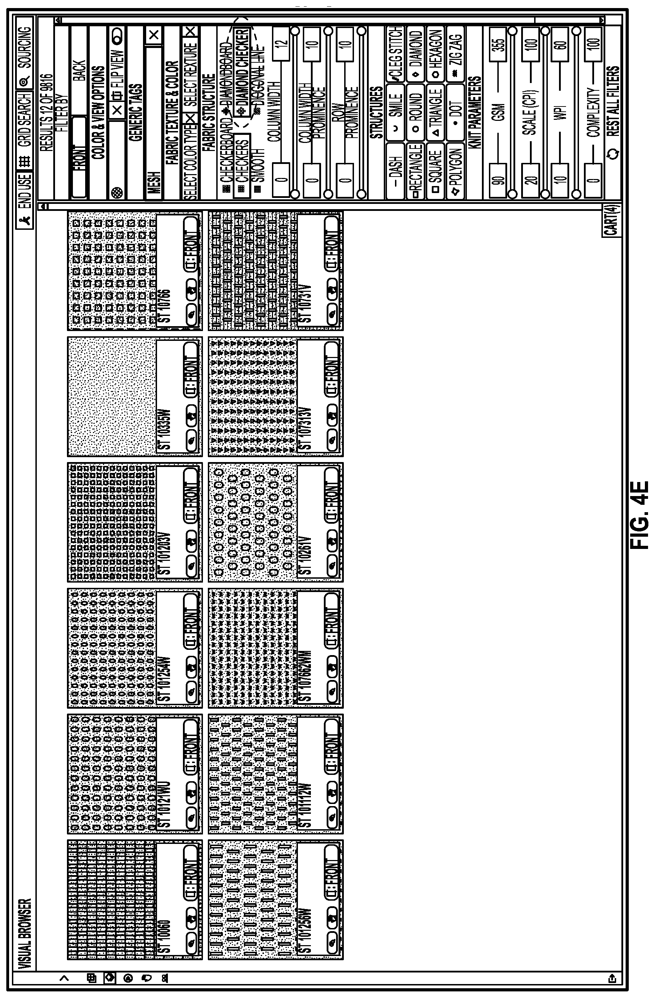

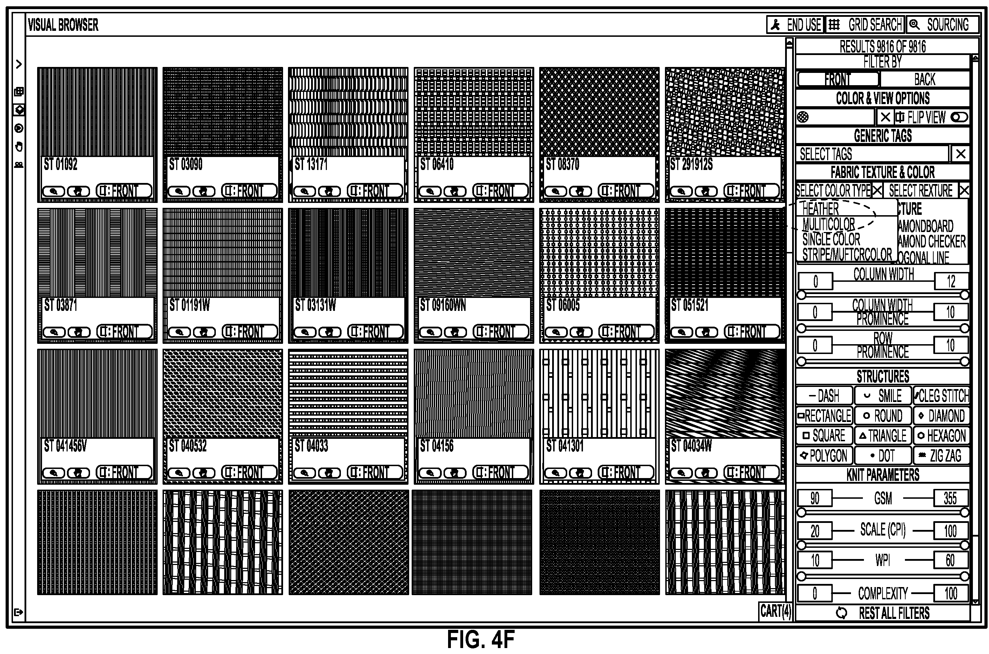

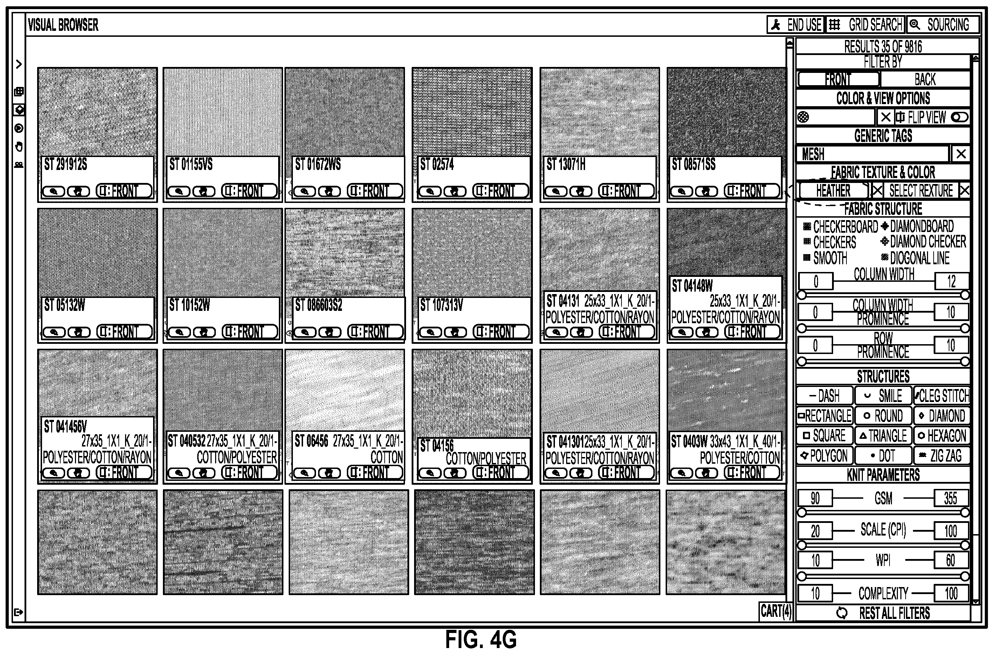

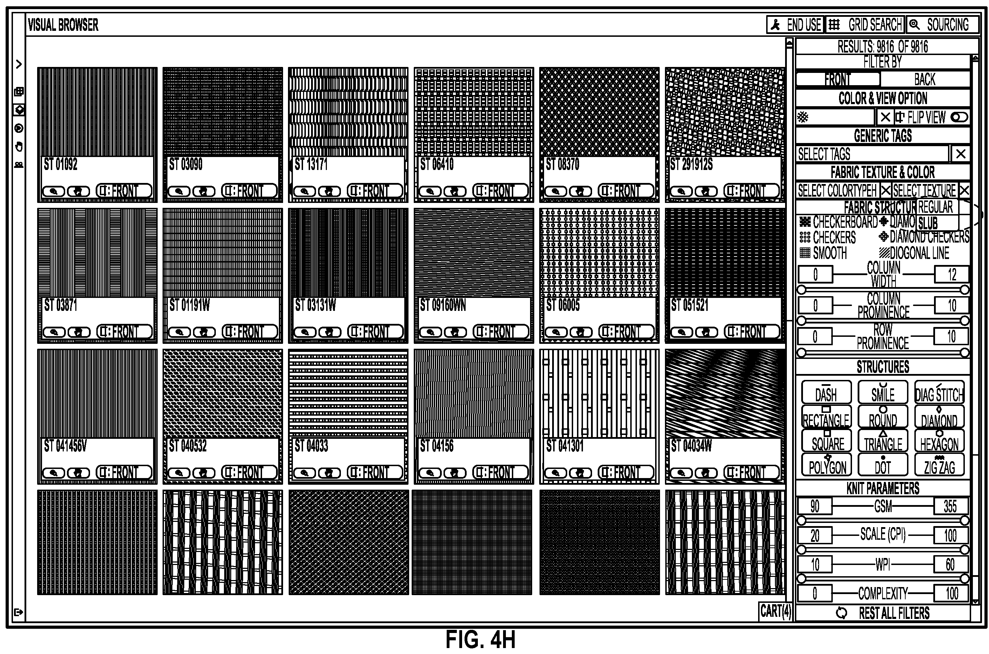

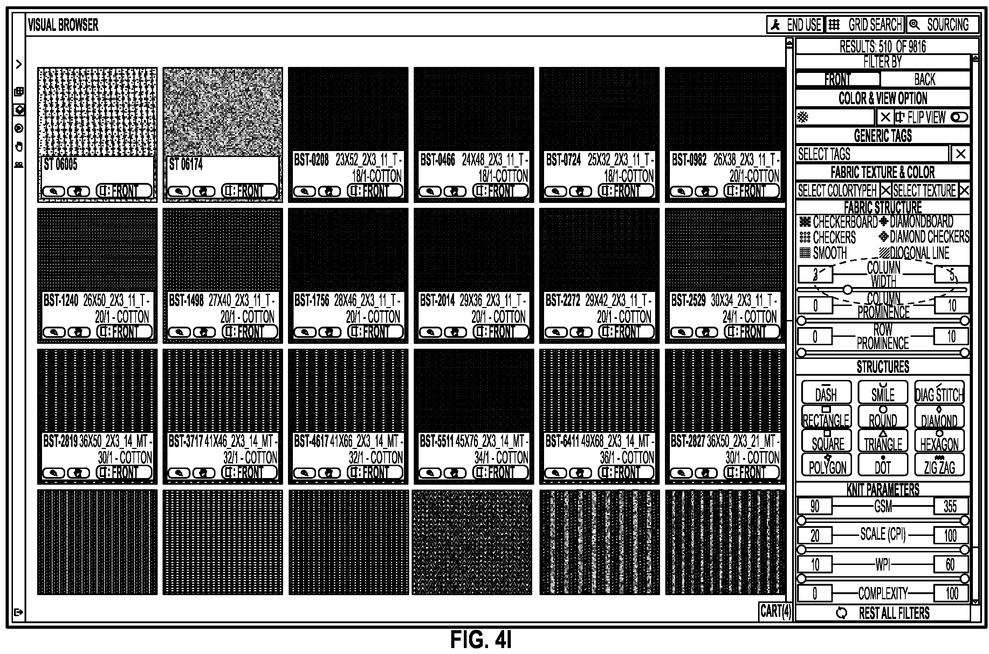

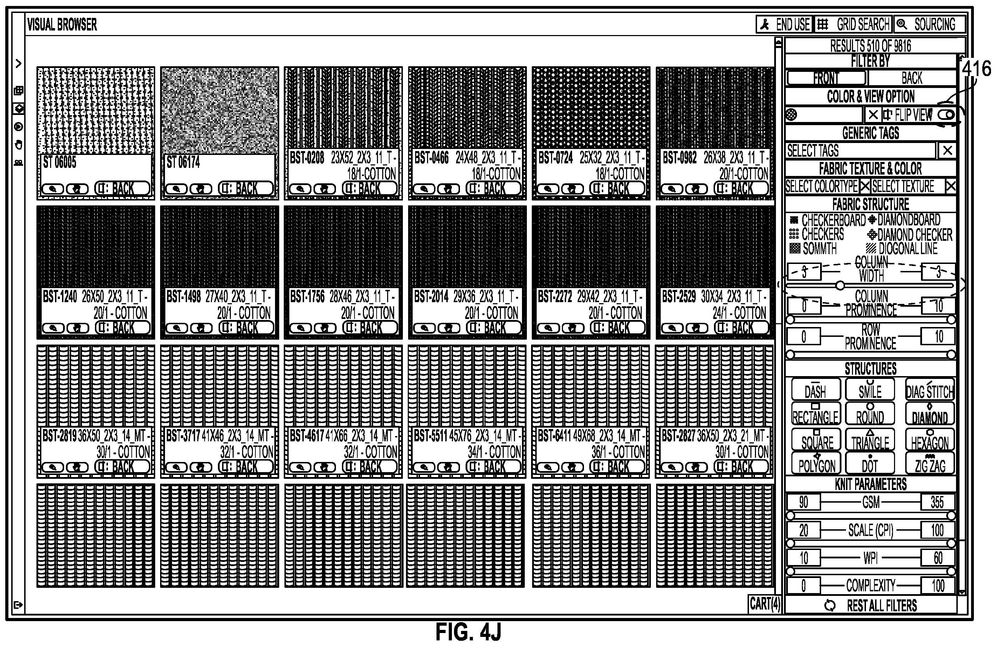

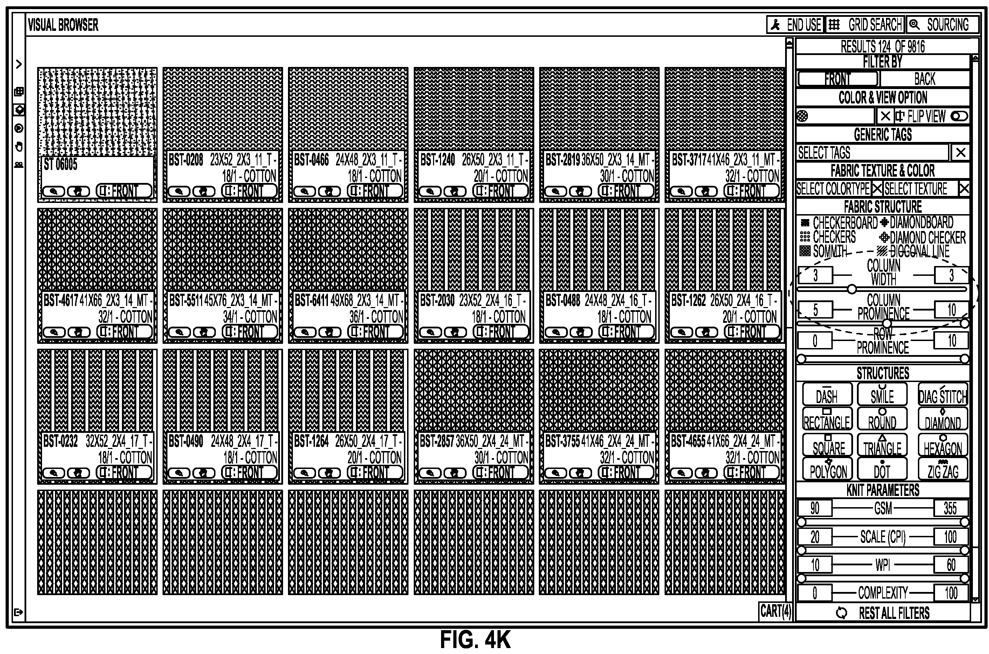

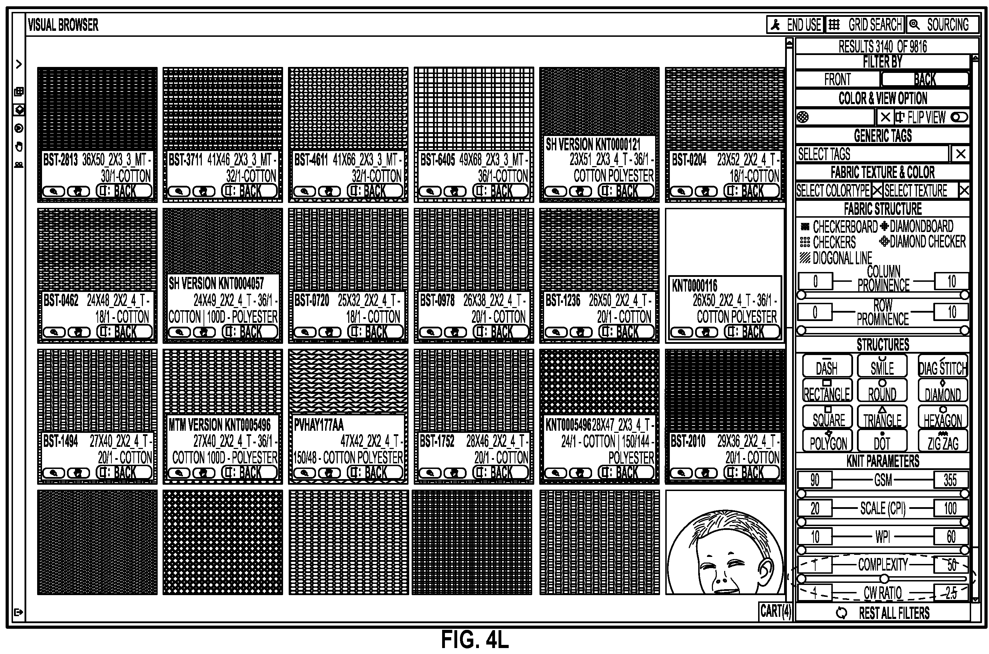

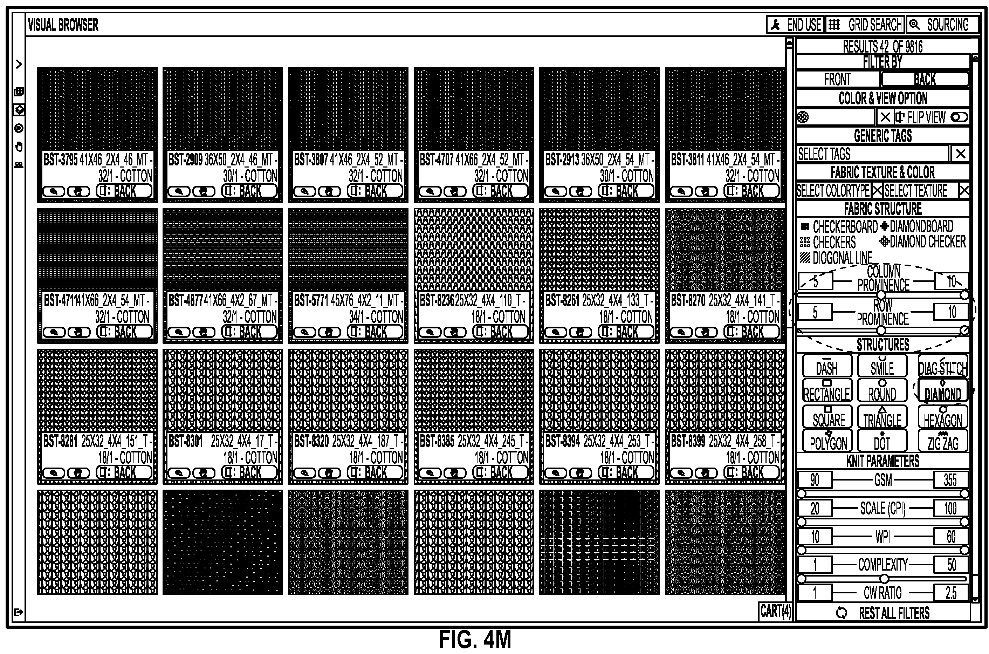

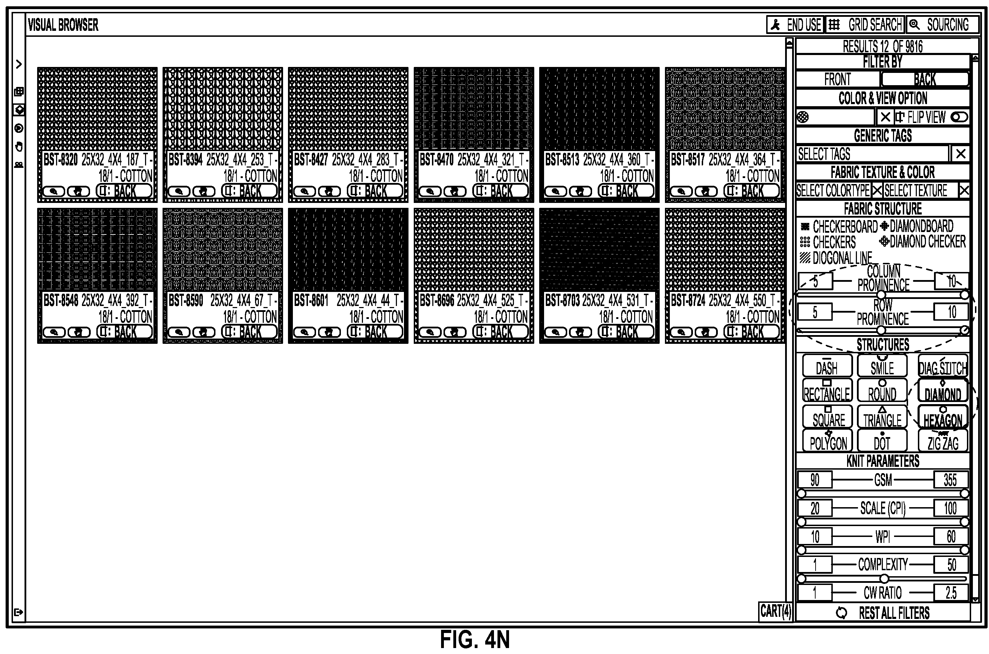

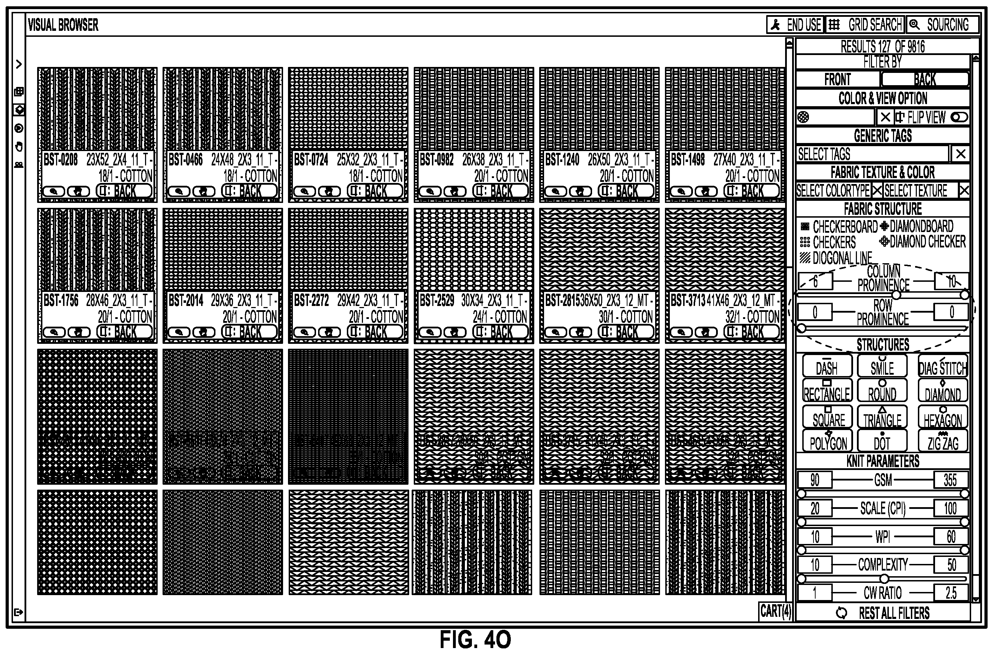

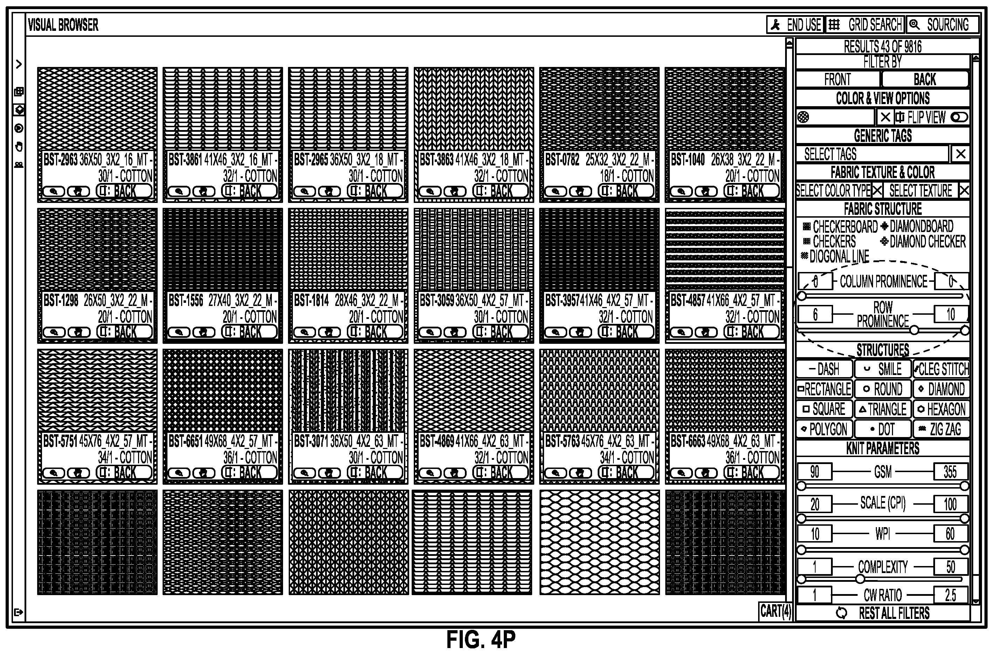

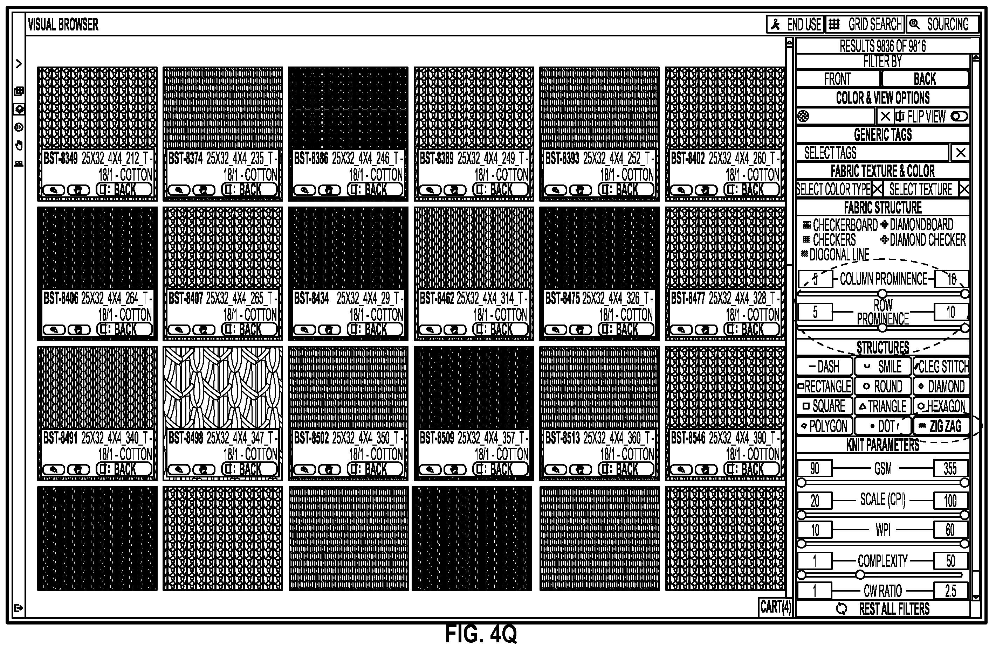

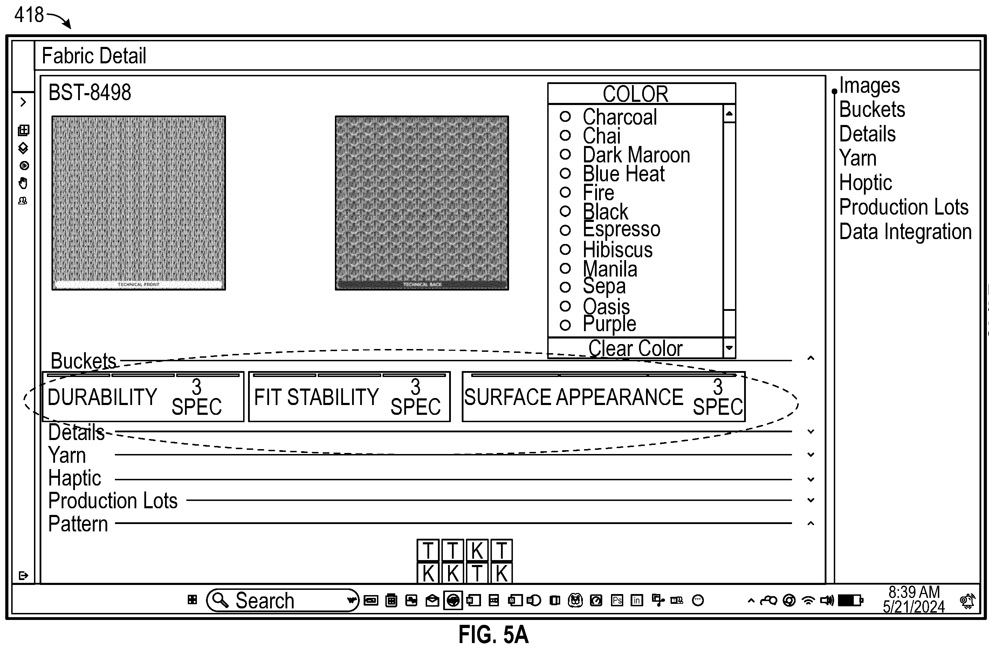

FIG. 4 is a screen shot of an example graphical user interface 400 having a visual browser 402 including fabric image display 404 and search bar 406. The graphical user interface 400 can be internet accessible URL (an HTML based or similar webpage) that can be accessed via a web browser, for example. Various search criteria 408 (e.g., "filter by") are available as part of the search bar 406. The graphical user interface 400 draws upon a large database (e.g., database 116 or database 308) of digital images of knit fabrics. This database includes 9800+ digital images and is growing. The digital images are displayed in the fabric image display 404 and can include images of the front and/or the back of the fabric(s). Each of the digital images can include an identification number 410, one or more filters (e.g., "search similar visual cues" for guided search) button 411 and an indication 412 if the image is of a front of the fabric or a back of the fabric. Additionally, hovering a cursor on the digital image of fabric can provide a more detailed enlarged view of the fabric. Clicking on one of the digital images can provide a window display such as "fabric detail" with additional data including colors used, fiber content (type of material), machine callout, wales per inch, thickness, grams per square meter, courses per inch, courses to wales ratio, single knit or double knit, color appearance class (single color, multi-color), production history, haptic data, fiber data, etc. as further shown and illustrated in FIGS. 5A-5F. Clicking on the digital image can also allow for ordering of sample of the fabric as indicated by "Cart" 414.

FIGS. 4A-4Q show various features of the graphical user interface including use of the search bar to search the database using various search criteria corresponding to the visual cues.

FIG. 4A shows the search bar with search criteria being "back" (a visual cue) and a particular color type (3c7da0) (a visual cue) applied to filter the database. This returns 155 results. Optionally, the color picker filter can be used to add the same color to all fabrics in the view rather than (or in addition to) filtering the database by the fabrics that have been produced in the past with that particular color type.

FIG. 4B shows search criteria being "front" (a visual cue) and a generic tag (a visual cue) such as one applied by a designer, producer, brand or manufacturer. The generic tags can be assigned tags based on conventional construction descriptions. FIGS. 4B-4K all utilize "front" as search criteria. However, this is not noted specifically below. FIG. 4B shows a drop down menu of various possible generic tags with a mesh tag about to be selected to filter the database. FIG. 4C shows the results of the mesh tag (16 results) applied with further search criteria of one construction attribute (one of the visual cues) having a "checkers" pattern-a fabric structure at a macroscale that provides a pattern about to be selected. The checkers is one of many (e.g., 200+) visual cues that have been developed by applicant. FIG. 4D shows the results of the mesh tag with the checkers (2 results). Only fabrics assigned as mesh with a checkers (90/180) grid pattern are show.

As an alternative example, FIG. 4E shows the results of the mesh tag with further search criteria of another construction attribute (another one of the visual cues) having a "diamond checkers" pattern-a fabric structure at a macroscale that provides a pattern about to be selected. Again, the diamond checkers is one of many (e.g., 200+) visual cues that have been developed by applicant. This combination of search criteria returns 12 fabrics as results. Only fabrics assigned as mesh with a diamond checkers (diagonal) grid pattern are shown.

FIG. 4F shows a search about to be conducted by "fabric texture & color" search criteria that are further of the visual cues. Particularly, the search is about to be conducted for yarn/fabric color type "Heather". Other search criteria include "multicolor", "single color" and "simple multicolor". All fabrics made of heather or mélange yarn are shown. The resulting fabrics can be further filtered by any further construction attribute. FIG. 4G shows the results (35 fabrics) of this search criteria.

FIG. 4H illustrates use of the "fabric texture" search criteria (a visual cue). This filters by different types of yarn (e.g., regular or slub).

FIG. 4I shows a search conducted by "column width" search criteria that is a further one of the visual cues. The search returns 512 fabrics from the database of fabrics having fabric fronts with columns (vertical graphical elements) that are 3 wales wide. FIG. 4J shows a "flip view" toggle 416 applied such that digital images shown in the fabric image display are all of a back of the fabrics returned using the search criteria of FIG. 4I.

FIG. 4K shows a search conducted by the "column width" search criteria and further by search criteria "column prominence" (another visual cue). The search returns 124 fabrics for all fabric fronts with columns that are 3 wales wide and prominent in appearance. The slider for column prominence above 5 (and up to 10) places emphasis on fabrics having a column visual appearance that is scored above a mean for the database.

FIG. 4L shows search criteria being "back" (as noted above a visual cue) and a complexity (another visual cue). The complexity (scored from 1 to 100) indicates if a back of a fabric is sufficiently complex that it can be used as a front of the fabric as measured by a number of knit stitches as compared to a number of tuck stitches plus a number of miss stitches. A higher complexity score (e.g., a score above 50 or so) is a simpler fabric less suitable for use as a front. Note: the "crying baby" in FIG. 4L, this image shows that this record needs attention (the image is missing).

FIG. 4M shows search criteria being back, column prominence (more prominent from 5 to 10), complexity (1 to 50), row prominence (another visual cue) (more prominent from 5 to 10) and structure-"diamond" (another visual cue). This combination of search criteria (corresponding to a combination of visual cues) returns 42 fabrics from the database. As a result of these search criteria, back views are filtered to show fabrics with assigned visual cues of strong column and row prominence. Fabrics returned are also assigned as complex for visual cue. Fabrics are additionally assigned as having a diamond structure as visual cue.

FIG. 4N shows the search criteria of FIG. 4M applied but further including application of structure-"hexagon" (another visual cue). This combination of search criteria results in 12 results. These displayed results thus have a combination of visual cues: back, strong column prominence, strong row prominence, considered relatively complex, diamond structure and hexagon structure.

FIG. 4O shows the search criteria of FIG. 4N but with diamond structure, hexagon structure and row prominence removed as a search criteria. This results in 127 fabrics having back views with strong column prominence as visual cues.

FIG. 4P shows the search criteria of FIG. 4N but with diamond structure, hexagon structure and column prominence removed as a search criteria. This results in 45 fabrics having back views with strong row prominence as visual cues.

FIG. 4Q shows search criteria similar to those of FIG. 4M with the search criteria being back, column prominence (more prominent from 5 to 10), complexity (1 to 50), row prominence (another visual cue) (more prominent from 5 to 10) and structure-"zig zag" (another visual cue). FIG. 4Q also illustrates an enlarged view of the fabric of the digital image provided by hovering a cursor over the particular digital image. Hovering also provides an option to add the particular fabric to the cart as indicated by a cart icon. This combination of search criteria (corresponding to a combination of visual cues) returns 45 fabrics from the database. As a result of these search criteria, back views are filtered to show fabrics with assigned visual cues of strong column and row prominence. Fabrics returned are also assigned as complex for visual cue. Fabrics are additionally assigned as having a zig zag structure as visual cue.

FIGS. 5A-5F show examples of an interface with a fabric detail 418 (e.g., a separate window in a browser) that results from clicking on a digital image of one of the fabrics of the graphical user interface 400 of FIGS. 4-4Q. Fabric detail can also be part of the graphical user interface of FIG. 4 according to further examples. The fabric detail has various details including images of the front and back of the fabric (which can be enlarged by hovering a cursor over), color options, legacy mill testing data (e.g., for durability, fit stability and/or surface appearance), details, yarn data, haptic data, production lots, pattern data (i.e. a stitch map pattern indicating tuck, knit and miss stitches for use in setting up a circular knitting machine). As indicated in FIG. 5A, legacy mill testing data can be analyzed and organized to predict this fabric's performance in various categories associated with end use. All colors that the fabric has been dyed in production are shown. Additionally, selecting a color from the list allows the user to visualize it on the fabric.

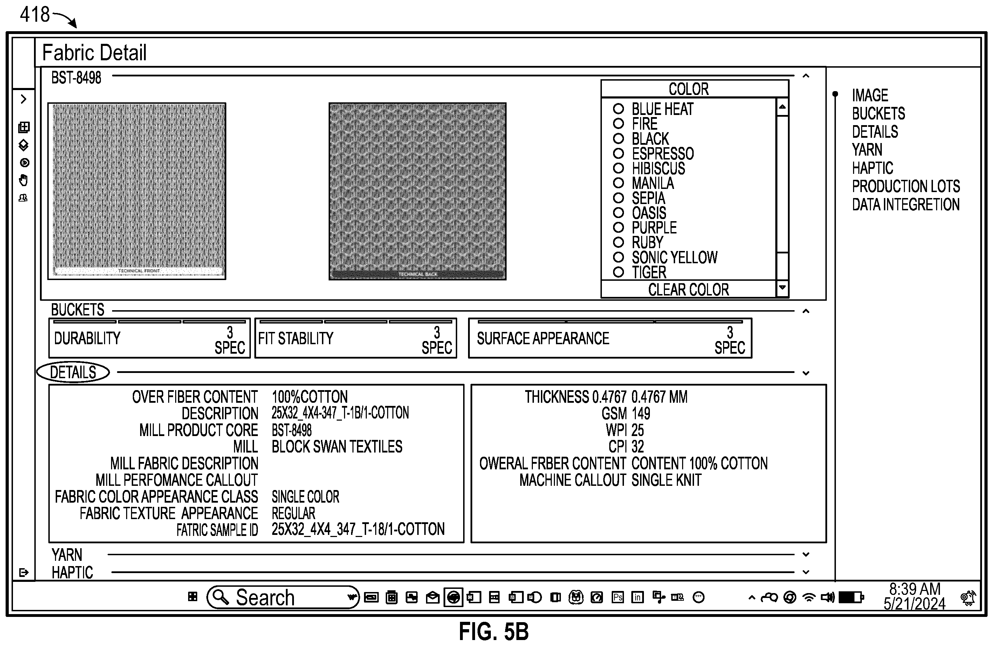

As shown in FIG. 5B, selecting details displays various construction details including, but not limited to fiber content, description, mill product code, mill used, mill fabric description, mill performance callout, machine callout, wales per inch, thickness, grams per square meter, courses per inch, courses to wales ratio, indication of single knit or double knit, color appearance class, fabric texture appearance and fabric sample identification.

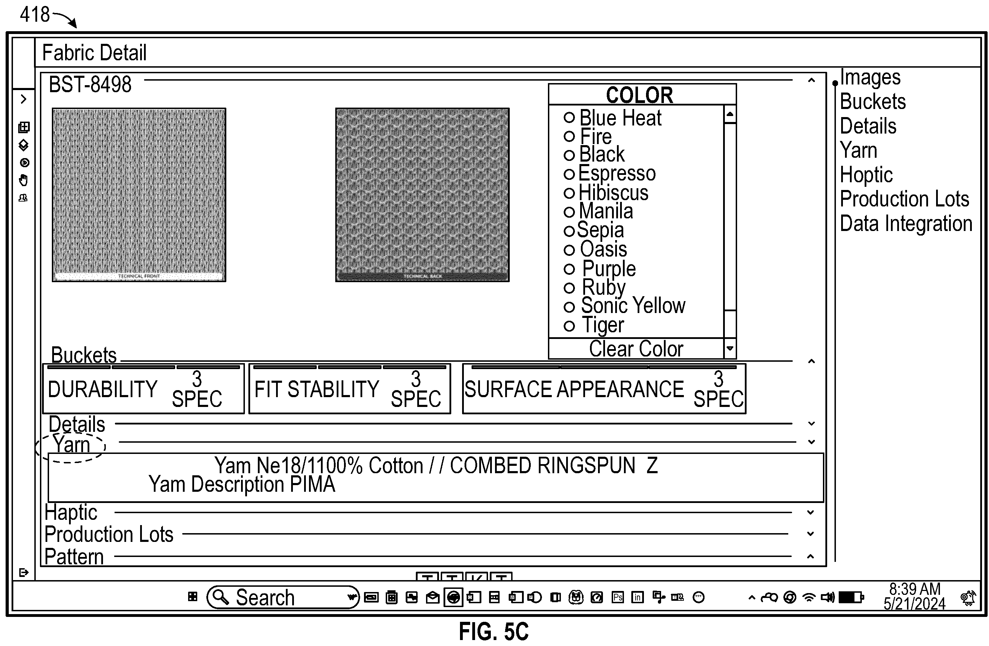

FIG. 5C shows yarn selected and displays the yarn type, yarn material and a yarn description, for example.

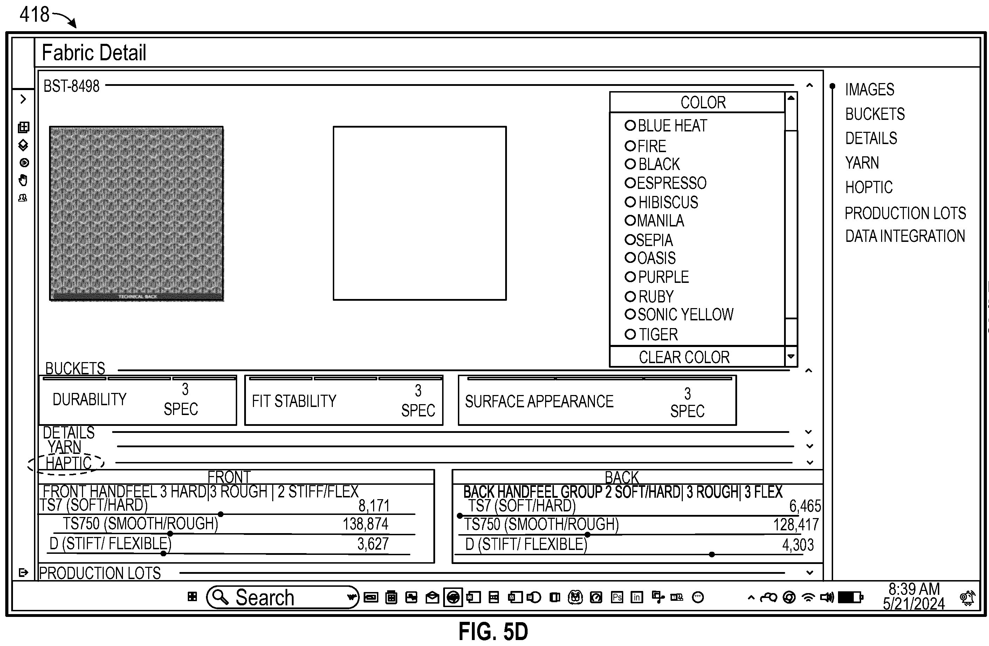

FIG. 5D shows haptic selected and displays haptic data that is quantifiably measured (e.g., Front hand feel including TS7, TS750 and D, back hand feel including TS, TS750 and D). Thus, digitized hand feel (or haptic) data are shown.

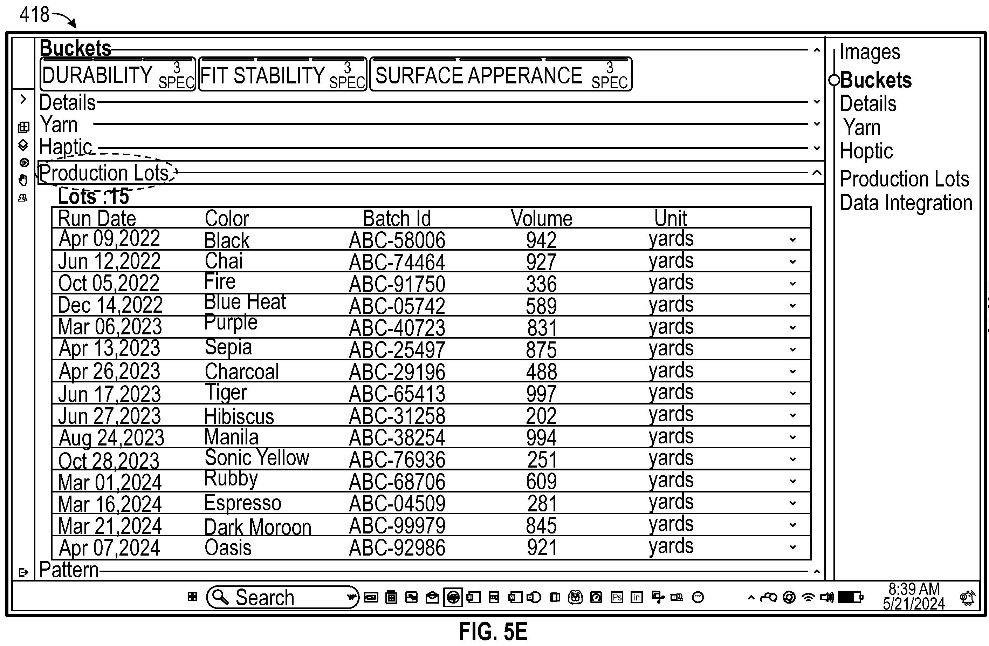

FIG. 5E shows production selected and displays relevant production data including run date, color, batch ID, volume, units, etc.

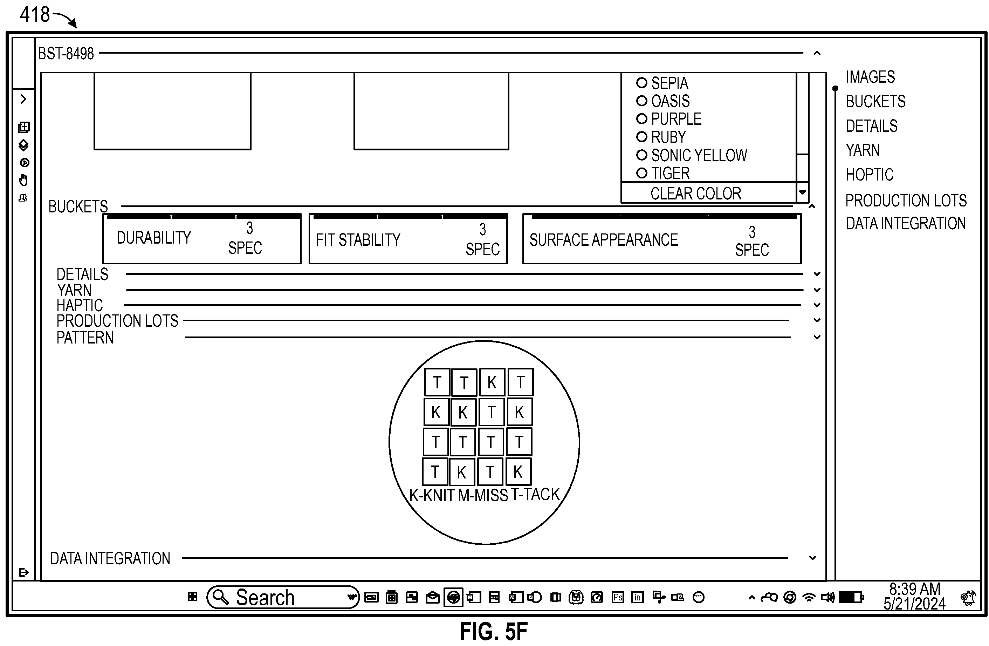

FIG. 5F show pattern selected and displays the stitch pattern repeat grid.

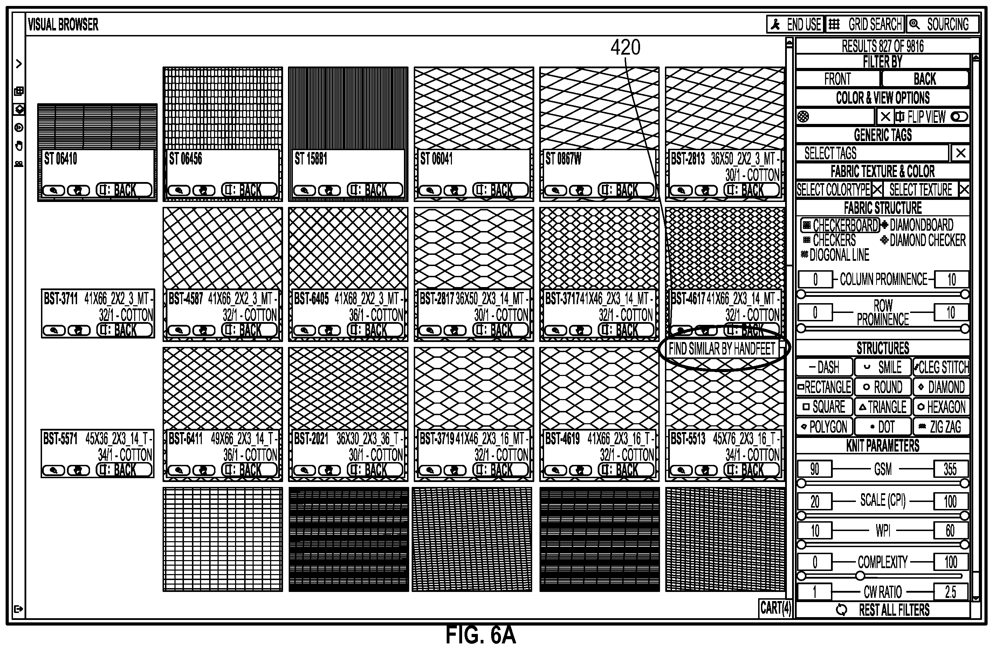

FIGS. 6A-6G show various additional search features/capabilities and additional filtering functions of the graphical user interface 400 discussed previously. FIG. 6A shows a "search by similar visual cues" or first guided search 420 feature (e.g., button 411 indicated in FIG. 4) that appears tagged with some or all of the digital images. This guided search 420 automatically populates search criteria into the search bar 406 to reproduced visual cues similar to those of a selected image if the guided search 420 is selected. Thus, the user can find fabric similar in appearance to a selected fabric by activating this filter.

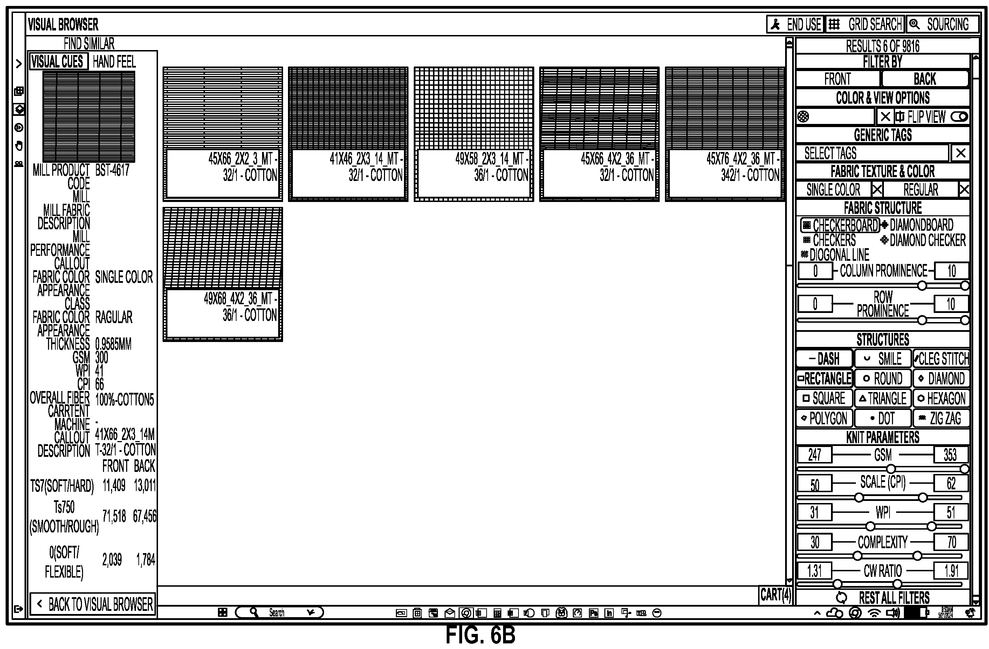

FIG. 6B shows the results of the first guided search 420 of FIG. 6A. This displays the selected fabric, displays relevant information, auto-populates search criteria corresponding to visual cues including excluding certain visual cues (but not: smile, diagonal stitch, round, diamond, square, triangle, hexagon, polygon, dot and zig zag) and including only certain visual cues such as a dash and rectangle. All fabrics with identical visual cues are show in FIG. 6B. The user can adjust the filters to tweak search criteria further as desired.

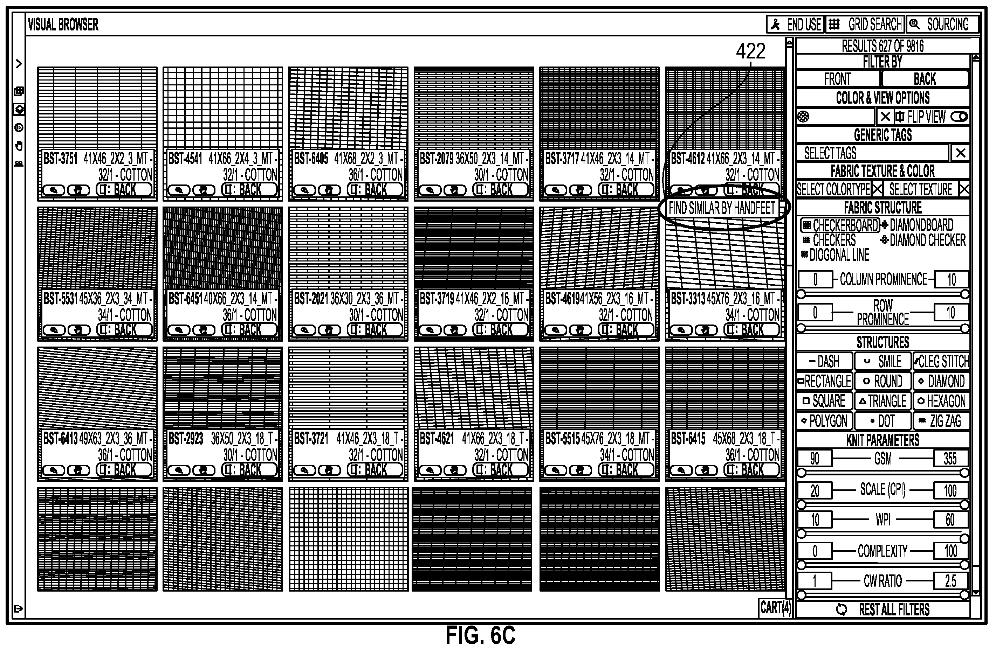

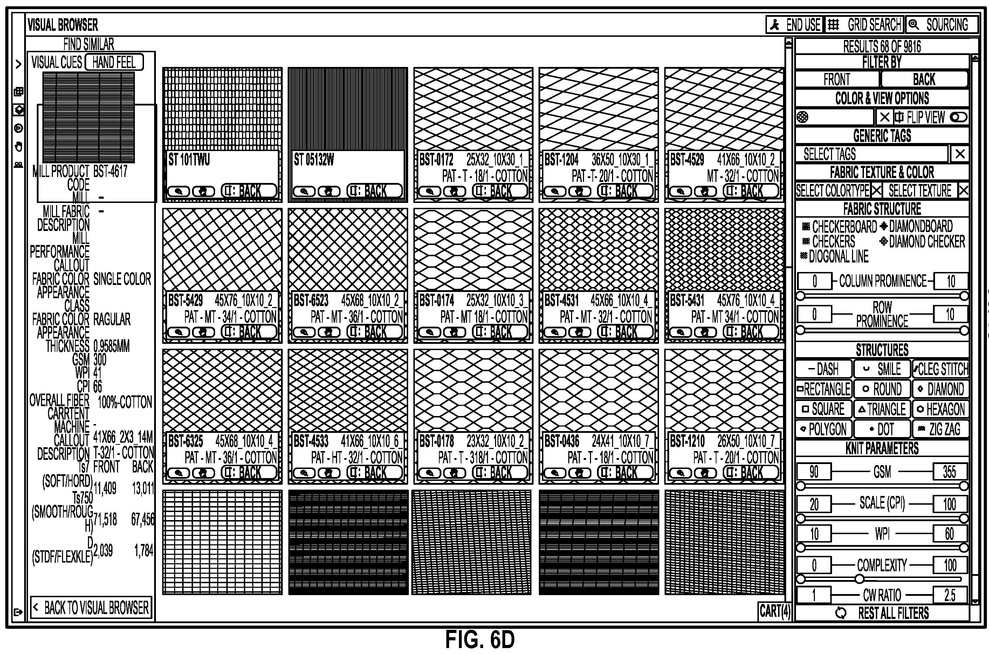

FIG. 6C shows a "search by similar hand feel" or second guided search 422 feature that appears tagged with some or all of the digital images. This second guided search 422 automatically returns results for fabrics have a similar or identical hand feel. FIG. 6D shows the results of the second guided search 422 of FIG. 6C. This displays the selected fabric and displays relevant hand feel information. All fabrics in any construction with similar haptic data are show in this view. The user can adjust the filters to tweak the search criteria further.

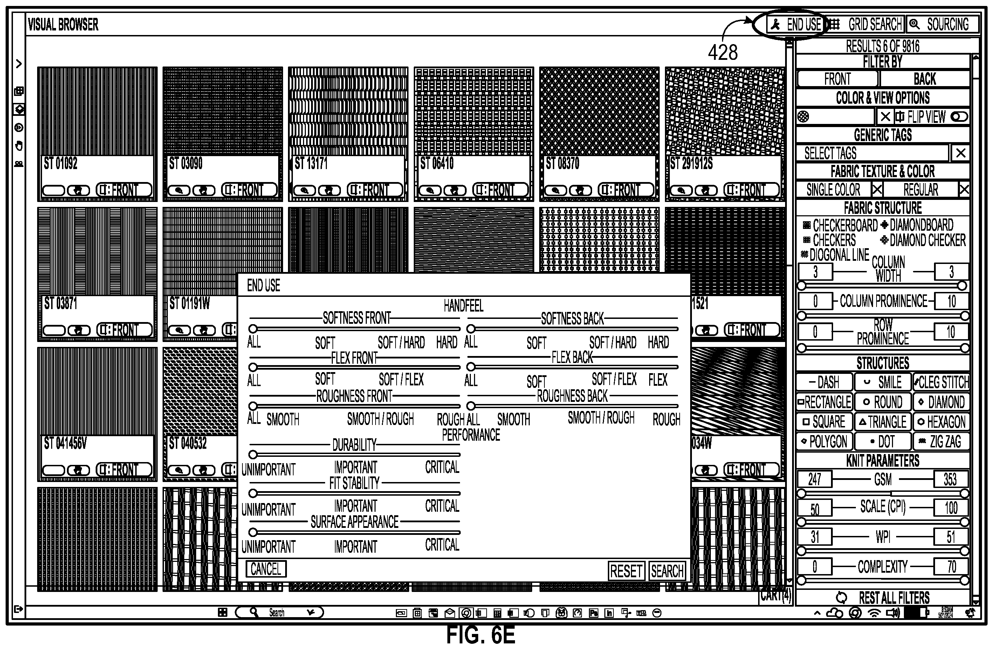

FIG. 6E shows use of an "end user" filter 424. The user can pre-screen fabrics by hand feel or performance before searching the database. Using this function eliminates selecting "cool fabrics" that aren't suitable for the garment end-use.

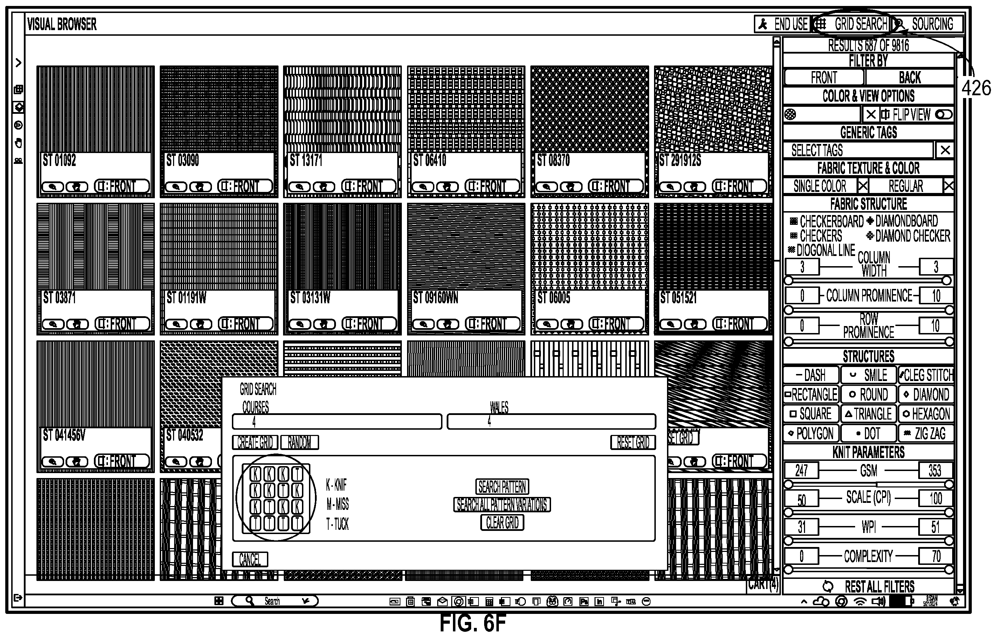

FIG. 6F illustrates use of a "grid" search 426 using technology discussed in the aforementioned and incorporated U.S. Patent. The grid search 426 allows the user can enter stitch pattern repeat data to search the database for similar results.

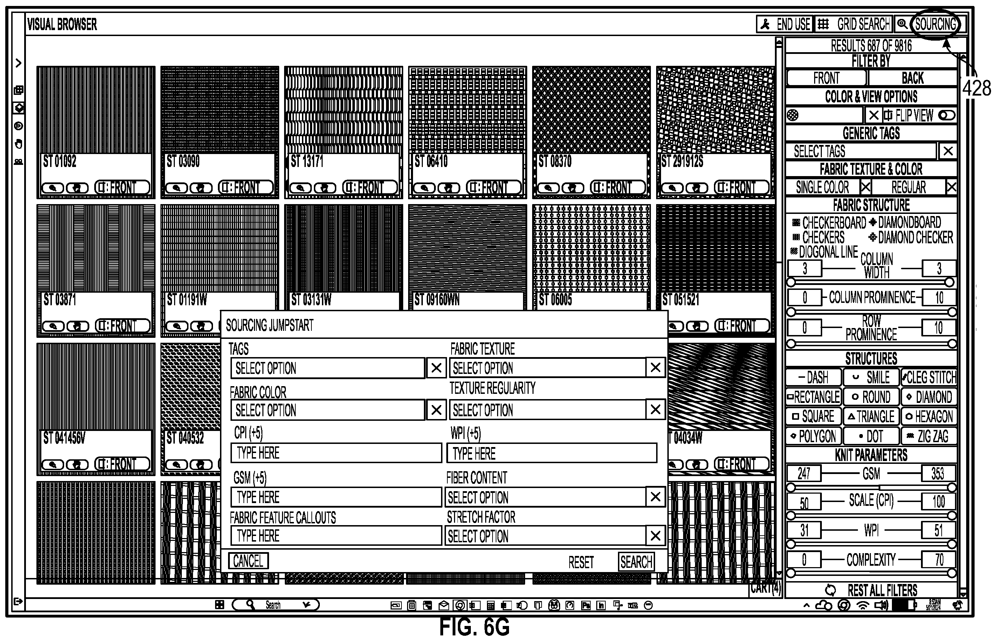

FIG. 6G illustrates use of a sourcing search 428. This allows for sourcing jumpstart as it allows the user can filter by various criteria (construction or other common attributes) to quickly narrow the search.

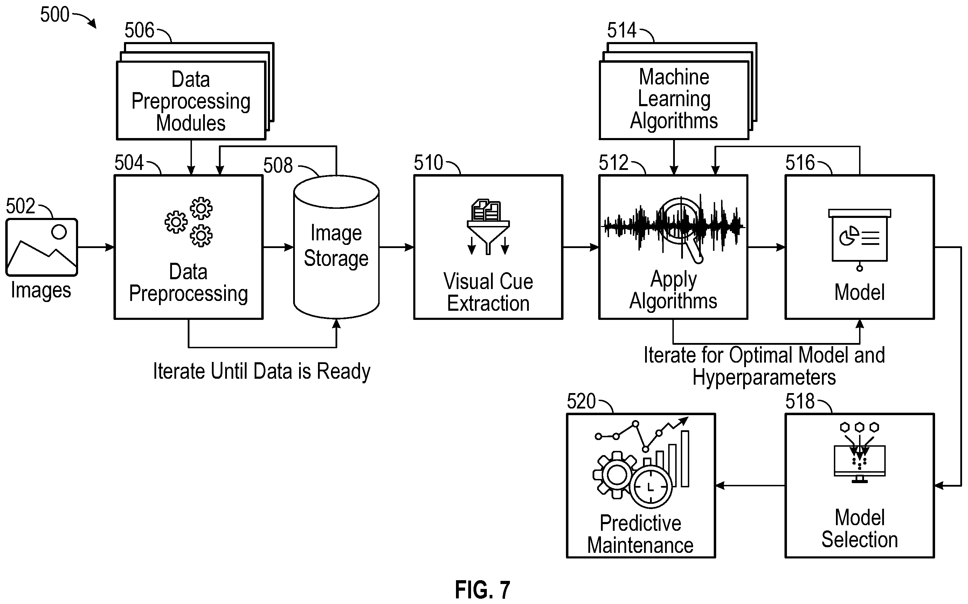

FIG. 7 shows a process flow 500 for creating and/or training a model used to determine visual cues consistent with at least one example of this disclosure. Process flow 500 may begin by receiving a plurality of known images

(502). The known images may be of physical fabric samples captured using a scanner, camera, etc. as disclosed herein. Because the images are of known fabrics they have been assigned various of the visual cues discussed previously such as in reference to FIGS. 4-4Q, have known size of the images, known image resolution, etc.

The images may be preprocessed (504). Preprocessing the data may include resizing images to a standard size, either in dimensions of pixels or units of length (e.g., inches). Additional preprocessing may include converting images from a first file type to a second file type. For example, tif images may be converted to png images. Other preprocessing may include color correction and/or adjustments, converting the images to greyscale, using of filters to minimize noise that may be contained in the images, etc. The data preprocessing may utilize one or more data preprocessing modules 506 to perform one or more of the preprocessing functions. Once the images are processed, they may be stored into one or more sets or subsets of images (508).

Once the images are stored, a first subset of the images may be selected to build and/or train a model and features of the image may be extracted (510). For example, as disclosed herein various image analysis methods may be employed to extract visual cues from the image. For example, using image analysis, visual cues such as, but not limited to, indication of front or back, a fabric color, a manufacturer assigned tag, a fabric texture and color, a fabric structure at a macroscale that provides a pattern, a column width, a column prominence, a row prominence, a shape structure on a microscale and one or more knit parameters may be extracted.

An algorithm may be applied that matches the extracted visual cues to the known construction attributes of the fabric (512). Matching the extracted features to known features may include applying various machine learning algorithms (514). Non-limiting examples of machine learning algorithms include regression (linear and/or non-linear), logistic regression, k-nearest neighbor techniques, Naive Bayes, random forest, etc.

Application of the various machine learning algorithms to match extracted visual cues to known construction attributes may result in a model being produced (516). Application of the algorithms may be done in an iterative manner to arrive at the model. The model may include variables that allow for values associated with extracted visual cues to be inputted, changed or accounted for. For example, one variable may allow for a pixel value and/or the difference between pixel values to be inputted as part of predicting a stitch type. Other values may include yarn dimensions, image dimensions, CPI and/or WPI values, etc. The various values may be specific values and/or ranges of values and values may be dependent on other values. For example, the yarn dimension may be specific values based off of the CPI and WPI, which may be a range of values.

As part of the model validation, a second subset of known images may be received and features extracted. Values associated with the extracted features may be inputted into the models. As part of the iterative process of determining the models, the confidence associated with each model may be determined using statistical methods. The model that shows the best statistical match may be selected (518). As new images are received from users and new determinations made, the various models generated may be updated as part of a predictive maintenance process (520).

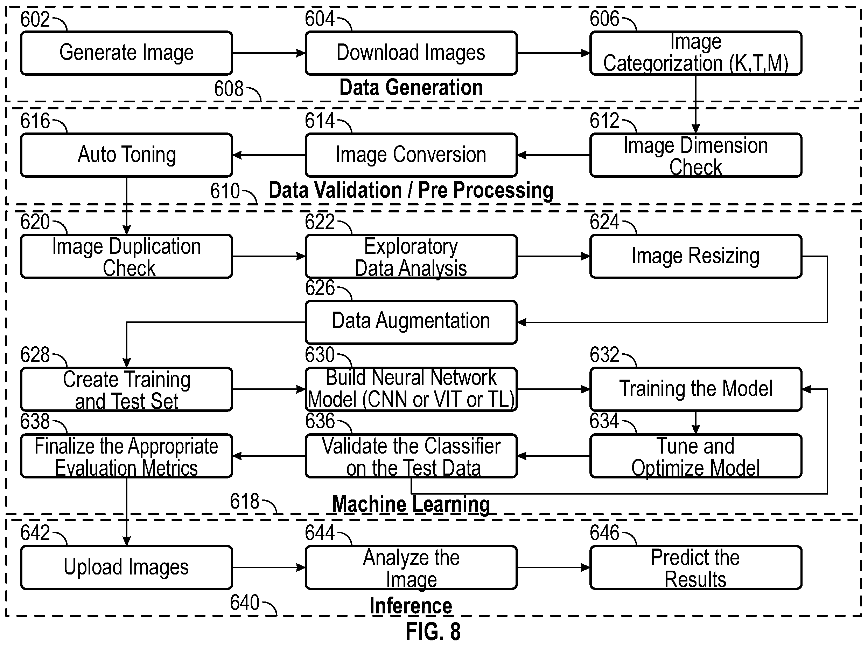

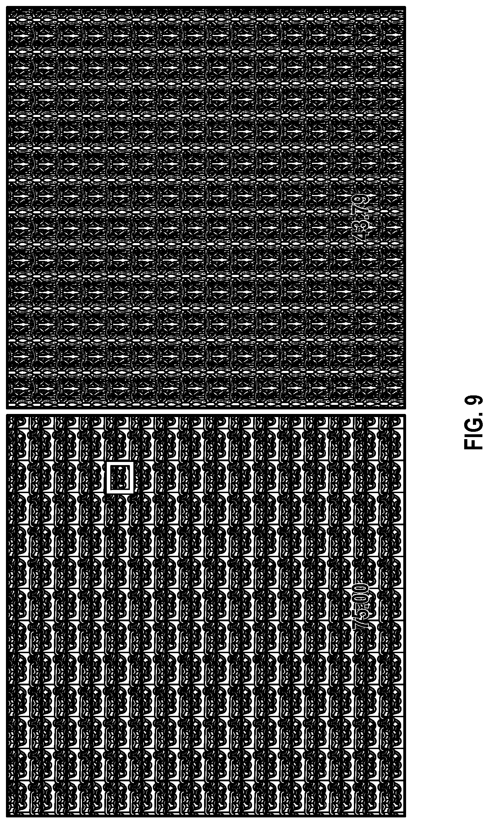

FIG. 8 shows an artificial intelligence (AI) system 600 using a machine learning model according to at least one embodiment of this disclosure. For example, system 600 may be used to generate a machine learning model to identify and assign visual cues. System 600 may begin at stage 602 where training images may be created or used. As disclosed herein, the training images may be actual images or computer generated images of fabrics. The images may include lines that represent yarn placement and show how one or more threads of yarn are added together to form a fabric. Examples of image analysis identifying visual cues including those used in training are provided subsequently herein beginning with FIG. 9. The training images may include the use of yarns of different diameter, coarseness, etc. Once generated the training images may be downloaded to a training server (604). The training server may be any computing device or collection of computing devices that perform any portions of system 600.

The training server may categorize the training images (606). For example, since the visual cues (the construction attributes) of the images are known because the visual cues were used to generate the images, the images may be categorized based on their construction attributes as the various visual cues.

Stages 602, 604, and 606, may be considered a data generation stage 608. Data is generated to create because it is neither practical nor necessary to first collect images from actual fabrics for use in training the machine learning model. Once the training images are generated, a data preprocessing or data validation stage 610 may be performed. Part of data preprocessing or validation may include performing an image dimension check (612). An image dimension check may include determining the image size is within a given range. The image dimension check may be performed on both generated images and captured images. For instance, after initial creation of the machine learning model, further training may be performed as scanned images of actual fabric are received.

Images may be converted from a first type to a second type (614). For example, images may be received as jpg, tiff, png, bitmap, etc. For consistency, the images may be converted to png for further analysis.

Once the images are of the same file type, image toning may be performed (616). The image toning may include converting color images to greyscale. Other examples of image toning may include color correction, the application of filters, etc. Image toning may also include filtering noise from images.

Once the training images are generated and preprocessed, machine learning may take place (618). First, duplicate images may be removed from the training images (620). Removing duplicate images from the training set may be helpful because using the same image over and over may skew results. After removing the duplicate images, an exploratory data analysis may be performed

(622). The exploratory analysis may be used to identify images that that have different sizes as well as to extract general properties of the images that may be used as variables for the machine learning model. For example, metadata from the image may indicate image resolution, image size, etc. The properties of the images may be inputs to the machine learning model so that images with similar properties may be treated in a similar manner.

The machine learning process may include resizing the images (624). The images may be resized so that each of the images has the same size. By having the same size, the process of stepping through each of the courses and wales shows in an image may be simplified because a known step size may be used.

Once the training images are resized, data augmentation may be applied (626). Data augmentation may include labeling portions or the data or otherwise associating data with one or more of the training images to assist in generating and training the machine learning model.

The training images may be divided into subsets (628). For example, the initial training images may include thousands, if not tens or hundreds of thousands, of images. To generate and test the machine learning model, the plurality of images may be divided into two or more subsets. A first subset of images may be used to generate the machine learning model and a second subset of the images may be used to test and/or validate the machine learning model.

Once the images have been divided into subsets, the machine learning model may be generated (630). Different types of models, such as convolutional neural network (CNN), vision transformer (ViT), transfer learning (TL), ResNet-18, etc. may be used. A CNN maybe a convolutional neural network that is a type of artificial neural network used in image recognition and processing that is specifically designed to process pixel data. A CNN may be applied to analyze visual imagery. As an example, CNN may be used for stitch type and stitch sequence prediction.

A ViT is a vision model based as closely as possible on the transformer architecture originally designed for text-based tasks. ViT may represent an input image as a sequence of image patches and directly predict class labels for the image. A TL may focus on storing knowledge gained while solving one problem and applying it to a different but related problem. For example, knowledge gained while learning to recognize stitch types may be used to recognize stitch sequences. ResNet-18 is a kind of convolution neural network that is 18 layers deep. A pre-trained version of the network trained on more than a million images may be loaded from a database. The pre-trained network may classify images into 1000 object categories, such as keyboard, mouse, pencil, and many animals. As used herein, ResNet-18 may be used to predict visual cues.

Once the machine learning model is built, the model can be trained using the first subset of the training images (632). Training the model may include using known information about the images. For example, the inputs for the models may be known data from the images about visual cues. Using the data techniques such as regression and others disclosed herein may be used to tune and optimize the model (634).

Once the model has been tuned and optimized, the second subset of data may be used to validate the model (636). For example, data from the second subset of images may be fed into the machine learning model as inputs and a determination made as to how well the model predicts the build for the second subset of images. The process of training, tuning, and validating the model may be repeated to improve accuracy. Once the machine learning model is trained, tuned, and validated, the parameters, sometimes call evaluation metrics, may be finalized (638).

After the model has been finalized, a user, may utilize an interface process 640 to determine the fabric sample's construction using the visual cues. For example, the user may upload a captured image of the fabric sample using a graphical user interface as disclosed herein (642). Once the image is uploaded, the image may be analyzed as disclosed herein (644). For example, visual cues as to the construction attributes of the image may be extracted and analyzed as disclosed with at least respect to FIGS. 4A-8 and FIGS. 9-13B. After analysis, the user may be presented with a predicted result (646). The predicted result may be indication of visual cues, search results, other relevant information including those discussed in FIGS. 4A-8 and FIGS. 9-13B usable to order or reconstruct the sample fabric.

FIG. 9 shows two images having different complexity scores. The image to the left has 75% of the stitches being knit (K) stitches. Consequently, the pattern produced is mostly with K-stitches and has a lower complexity look and lower complexity pattern. In contrast, the image to the right for the viewer has 43.79% K stitches and has a more complex pattern.

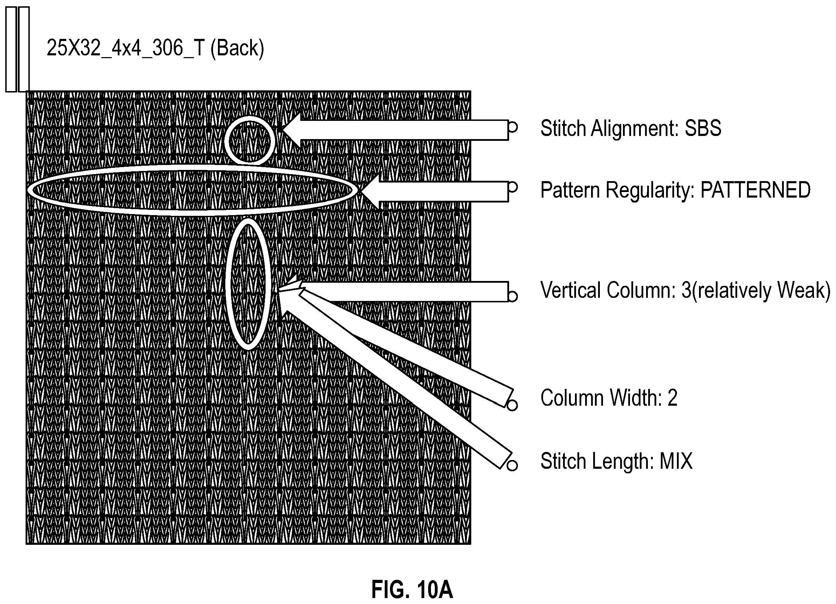

FIG. 10A show an digital image of a front of a knit fabric sample with examples of various visual cues identified and applied through image analysis. These visual cues include: stitch alignment (side by side), pattern regularity, vertical column prominence score (3-relatively weak), column width (2) and stitch length (mix).

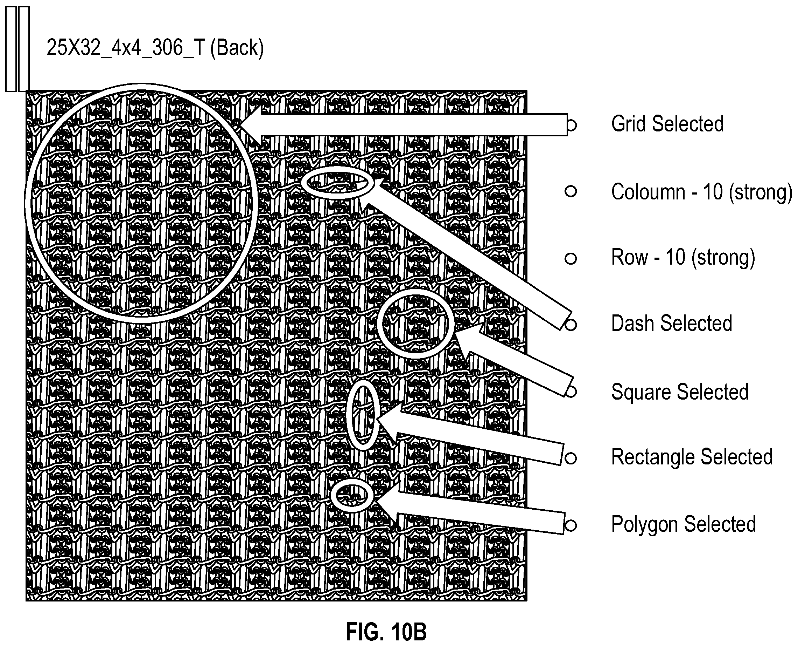

FIG. 10B shows a digital image of a back of the same knit fabric sample as FIG. 10A. FIG. 10B shows various visual cues identified and applied through image analysis. These visual cues include: grid pattern, vertical column prominence score (10-strong), row prominence score (10-strong), structure-dash, structure-square, structure-rectangle and structure-polygon.

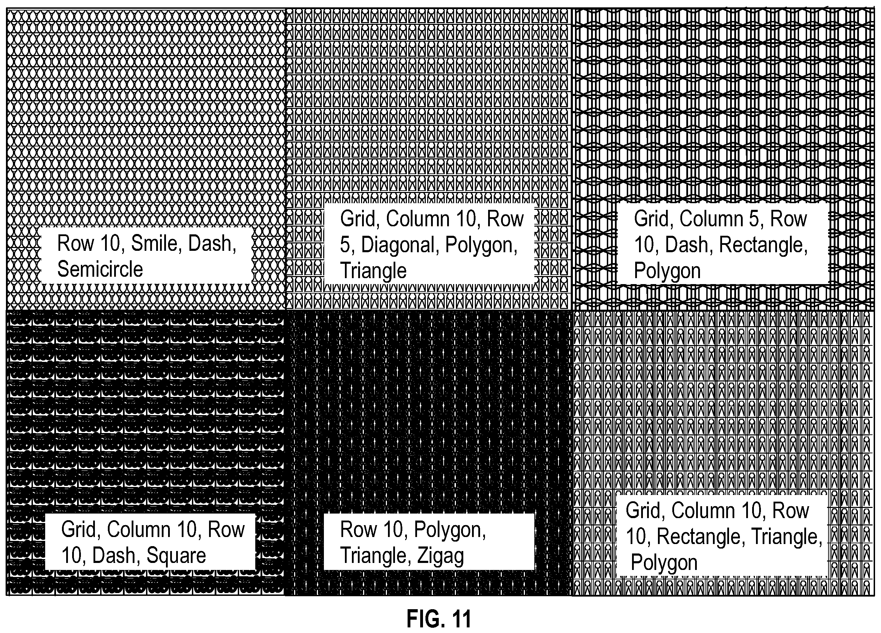

FIG. 11 shows various digital images with various visual cues identified and applied through image analysis. The examples of FIG. 11 are merely representative.

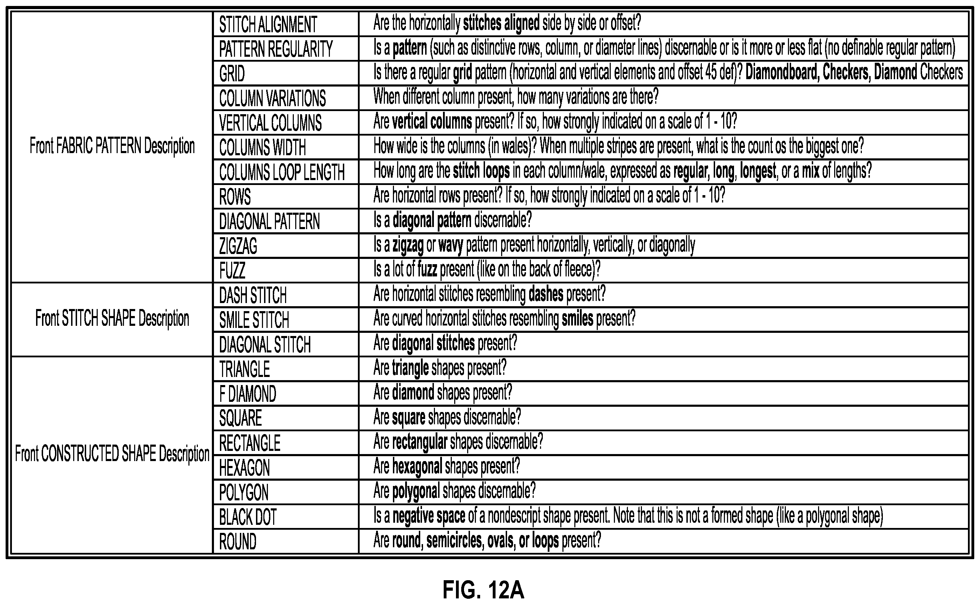

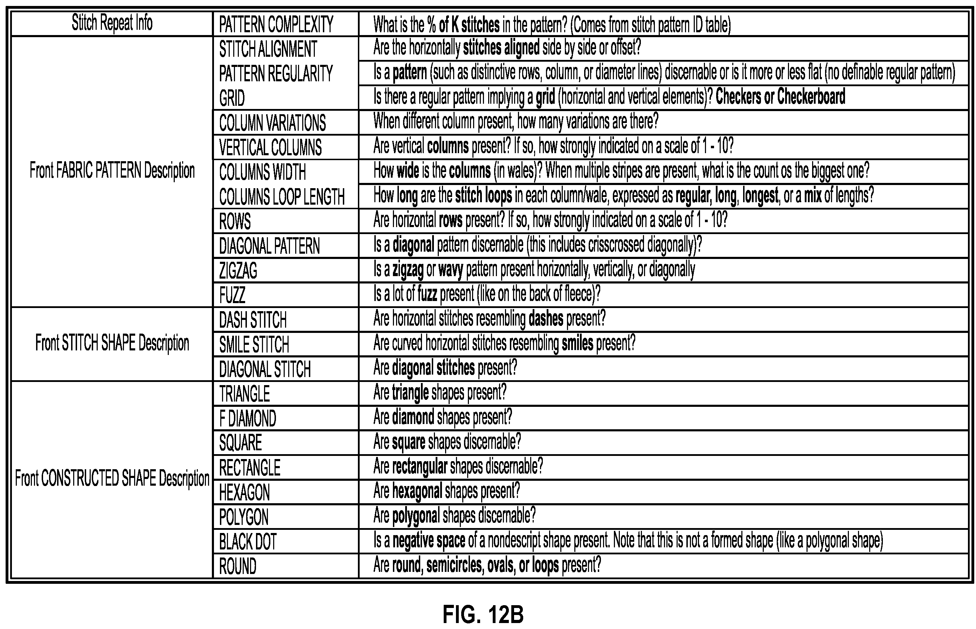

As illustrated in the tables of FIGS. 12A and 12B, and previously noted herein, overall appearance of the front and the back of fabric is significantly different and must be treated for analysis purposes differently. As a consequence, some same visual cue (construction attribute) are used to describe both the fabric front and back but they must be applied differently.

FIG. 12A shows a table comprising a chart of questions used in identifying visual cues for the front of a fabric. FIG. 12B shows a table comprising a chart of questions used for identifying visual cues for the back of the fabric. As illustrated in FIG. 12A and 12B the visual cues differ somewhat for the front from the back and the criteria for the visual cues can be somewhat different.

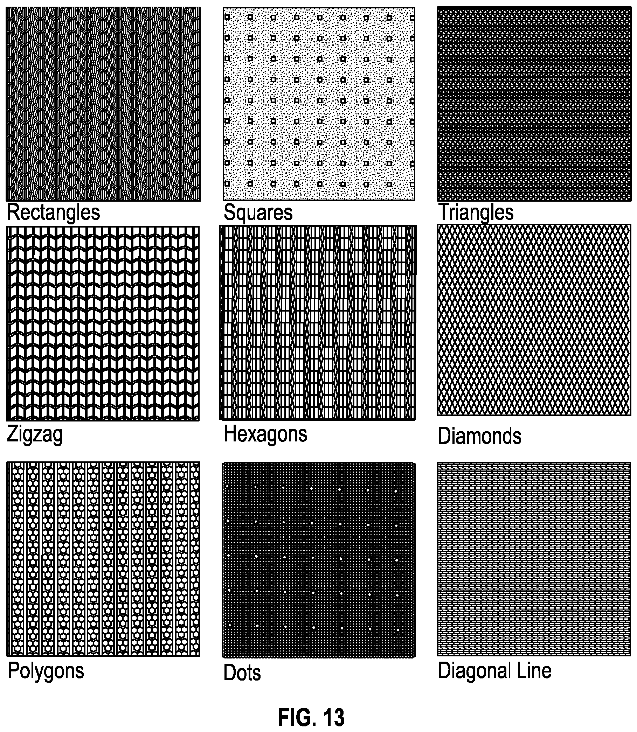

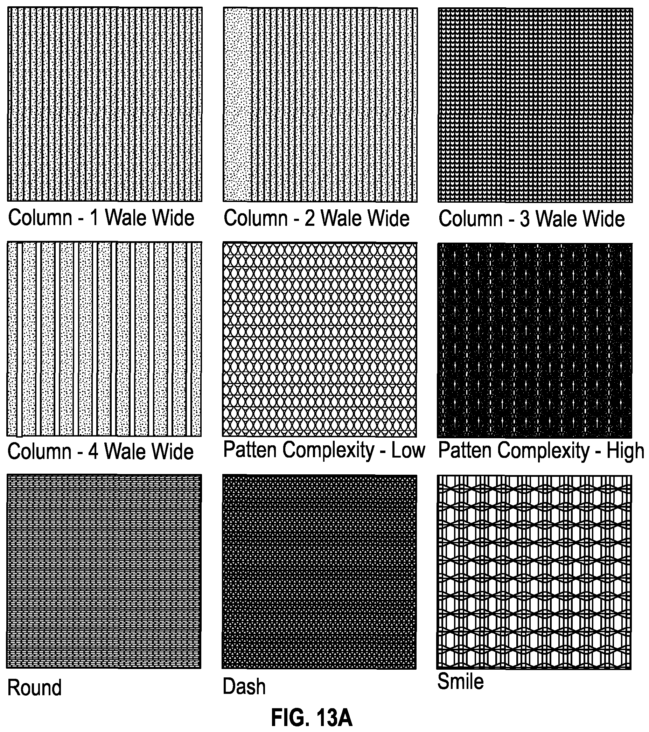

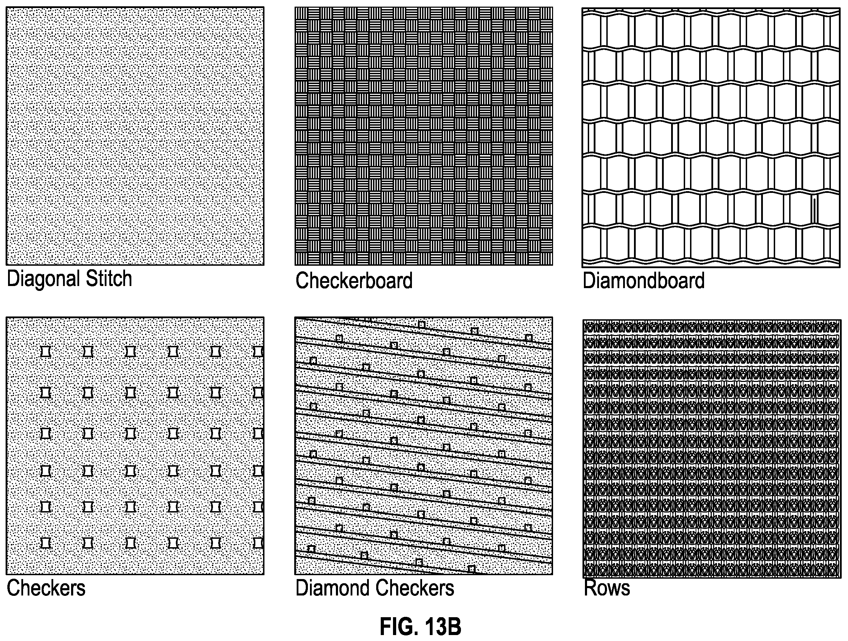

FIG. 13 shows representative digital images showing some examples of the visual cues including: rectangles, squares, triangles, zig zag, hexagons, diamonds, polygons, dots and diagonal lines. FIG. 13A shows further representative digital images showing some further examples of visual cues including: column one wale wide, column two wales wide, column three wales wide, column four wales wide, complexity-low, complexity-high, round, dash and smile. FIG. 13B shows further representative digital images showing some further examples of visual cues including: diagonal stitch, checkerboard, diamond board, checkers, diamond checkers and rows. Various iterations and permutations of the visual cues of FIGS. 13-13B are contemplated and indeed have been added to the database at this time.

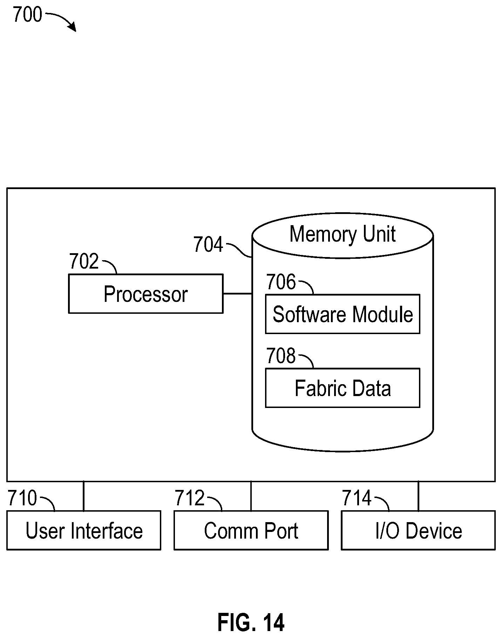

FIG. 14 shows a schematic of a computing device 700 consistent with at least one embodiment of this disclosure. Computing device 700 may include a processor 702 and a memory 704. Memory 704 may include a software module 706 and fabric data 708. While executing on processor 702, software module 704 may perform processes for generating machine learning models and/or determining fabric construction, including, for example, one or more visual cues included in the methods and systems disclosed herein. Computing device 700 also may include a user interface 710, a communications port 712, and an input/output (I/O) device 714.

As disclosed herein, software module 706 may include instructions that when executed by processor 702 that cause processor 702 to retrieve images and output build sheets as disclosed herein. For example, a user may use user interface 710, which may display GUI 700, to upload an image received by processor 702 and display build sheets or other fabric data.

User interface 710 can include any number of devices that allow a user to interface with computing device 700. Non-limiting examples of user interface 710 include a keypad, a microphone, mouse, a display (touchscreen or otherwise), etc.

Communications port 712 may allow computing device 700 to communicate with various information sources and devices, such as, but not limited to, remote computing devices such as servers or other remote computers maintained by fabric mills, clothing designers, etc. Non-limiting examples of communications port 712 include, Ethernet cards (wireless or wired), Bluetooth^{®} transmitters and receivers, near-field communications modules, etc.

I/O device 714 may allow computing device 700 to receive and output information. For example, I/O device 714 may be a scanner that allows a user to directly upload an image for processing as disclosed herein. Non-limiting examples of I/O device 714 include, a camera (still or video), fingerprint or other biometric scanners, etc.

### Examples and Notes

The following, non-limiting examples, detail certain aspects of the present subject matter to solve the challenges and provide the benefits discussed herein, among others.

Example 1 is a method of providing for search and review of an electronic database of knit fabric samples, the method optionally comprising: providing a plurality of digital images of a plurality of knit fabrics; organizing the plurality of digital images in the database based upon corresponding visual cues extracted using an image analysis performed on each of the plurality of digital images, wherein the visual cues are construction attributes of the plurality of knit fabrics; displaying one or more of the plurality of digital images for review; and providing for search of the database using one or more of the visual cues.

In Example 2, the subject matter of Example 1 optionally includes, wherein the organizing the plurality of digital images utilizes an artificial intelligence (AI) system to generate and assign the visual cues to each of the plurality of digital images based on the image analysis.

In Example 3, the subject matter of Examples 1-2 optionally includes, allowing for selecting at least one of the one or more of the visual cues as search criteria; searching the database based upon the search criteria; and updating the displaying of the one or more of the plurality of digital images for review based upon the search criteria.

In Example 4, the subject matter of Examples 1-3 optionally includes, allowing for selecting one of the plurality of digital images; and displaying data regarding the knit fabric of the one of the plurality of digital images, wherein the data includes one or more of: colors used, fiber content, machine callout, wales per inch, thickness, grams per square meter, courses per inch, courses to wales ratio, indication of single knit or double knit, color appearance class, production history, haptic data and fiber data.

In Example 5, the subject matter of Examples 1-4 optionally includes, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

In Example 6, the subject matter of Example 5 optionally includes, wherein the one or more knit parameters include at least one of a complexity and a courses to wales ratio in addition to one or more of: grams per square meter, wales per inch and courses per inch.

In Example 7, the subject matter of Example 6 optionally includes, wherein the complexity indicates if a back of a fabric is sufficiently complex that it can be used as a front of the fabric as measured by a number of knit stitches as compared to a number of tuck stitches plus a number of miss stitches.

In Example 8, the subject matter of Examples 5-7 optionally includes, wherein the shape structure on the microscale includes one or more of: a dash, a smile, a rectangle, a round, a diamond, a square, a triangle, a hexagon, a polygon, a dot, a zig zag and a diagonal stitch.

In Example 9, the subject matter of Examples 5-8 optionally includes, wherein the fabric structure at the macroscale includes one or more of: a checkerboard, a diamond board, checkers, a smooth, diamond checkers and a diagonal line.

In Example 10, the subject matter of Examples 1-9 optionally includes, allowing for selecting one of the plurality of digital images; and facilitating placing a purchase order for one or more of the fabric samples associated with the one of the plurality of digital images.

Example 11 is a system allowing for review of a digital representation of a knit fabric, the system comprising: at least one processor; and at least one memory storing instructions that, when executed by the at least one processor, cause the at least one processor to perform actions comprising: access an electronic database of a plurality of digital images of a plurality of knit fabrics, select, based upon a search criteria, one or more of the plurality of digital images having shared visual cues extracted using an image analysis performed on each of the plurality of digital images, wherein the visual cues are construction attributes of the plurality of knit fabrics; and display the one or more of the plurality of digital images for review.

In Example 12, the subject matter of Example 11 optionally includes, wherein the search criteria correspond to one or more of the visual cues.

In Example 13, the subject matter of Examples 11-12 optionally includes, wherein the at least one processor performs further actions comprising: allow for selection of at least one of the one or more of the plurality of digital images based upon the review; and allow for placement of a purchase order for one or more fabric samples associated with the at least one of the one or more of the plurality of digital images.

In Example 14, the subject matter of Examples 11-13 optionally includes, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

In Example 15, the subject matter of Example 14 optionally includes, wherein the one or more knit parameters include at least one of a complexity and a courses to wales ratio in addition to one or more of: grams per square meter, wales per inch and courses per inch.

In Example 16, the subject matter of Example 15 optionally includes, wherein the complexity indicates if a back of a fabric is sufficiently complex that it can be used as a front of the fabric as measured by a number of knit stitches as compared to a number of tuck stitches plus a number of miss stitches.

In Example 17, the subject matter of Examples 14-16 optionally includes, wherein the shape structure on the microscale includes one or more of: a dash, a smile, a rectangle, a round, a diamond, a square, a triangle, a hexagon, a polygon, a dot, a zig zag and a diagonal stitch.

In Example 18, the subject matter of Examples 14-17 optionally includes, wherein the fabric structure at the macroscale includes one or more of: a checkerboard, a diamond board, checkers, a smooth, diamond checkers and a diagonal line.

In Example 19, the subject matter of Examples 11-18 optionally includes, wherein the visual cues are extracted using an artificial intelligence (AI) system to generate and assign the visual cues to each of the digital images based on the image analysis.

In Example 20, the subject matter of Examples 11-19 optionally includes, wherein the at least one processor performs further actions comprising: allow for selecting one of the plurality of digital images; and display data regarding the knit fabric of the one of the plurality of digital images, wherein the data includes one or more of: colors used, fiber content, machine callout, wales per inch, thickness, grams per square meter, courses per inch, courses to wales ratio, indication of single knit or double knit, color appearance class, production history, haptic data and fiber data.

Example 21 is a method of analyzing a fabric sample, the method comprising: providing a digital image of the fabric sample; generating and assigning visual cues from the digital image using an artificial intelligence (AI) system performing image analysis, wherein the visual cues correspond to construction attributes of the fabric sample; organizing the digital image with the assigned visual cues in an electronic database including a plurality of digital images of a plurality fabric samples, wherein the database is organized and searchable based upon visual cues shared between the digital image and the plurality of digital images assigned by the AI system.

In Example 22, the subject matter of Example 21 optionally includes, displaying the plurality of digital images for review; providing for a search of the database using search criteria corresponding to one or more of the visual cues.

In Example 23, the subject matter of Examples 21-22 optionally includes, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

In Example 24, the subject matter of Example 23 optionally includes, wherein the one or more knit parameters include at least one of a complexity and a courses to wales ratio in addition to one or more of: grams per square meter, wales per inch and courses per inch.

In Example 25, the subject matter of Example 24 optionally includes, wherein the complexity indicates if a back of a fabric is sufficiently complex that it can be used as a front of the fabric as measured by a number of knit stitches as compared to a number of tuck stitches plus a number of miss stitches.

In Example 26, the subject matter of Examples 23-25 optionally includes, wherein the shape structure on the microscale includes one or more of: a dash, a smile, a rectangle, a round, a diamond, a square, a triangle, a hexagon, a polygon, a dot, a zig zag and a diagonal stitch.

In Example 27, the subject matter of Examples 23-26 optionally includes, wherein the fabric structure at the macroscale includes one or more of: a checkerboard, a diamond board, checkers, a smooth, diamond checkers and a diagonal line.

Example 28 is a method for training a machine learning model to determine construction attributes of a knit fabric, the method comprising: receiving a first subset of training images of a first plurality of knit fabrics; extracting one or more visual cues from each of the first subset of training images, wherein the one or more visual cues are at least some of the construction attributes of the first plurality of knit fabrics; mapping the one or more visual cues from each of the first subset of training images to a variable of the machine learning model; receiving a second subset of training images of a second plurality of knit fabrics; extracting one or more visual cues from each of the second subset of training images; evaluating the machine learning model using the one or more visual cues extracted from each of the second subset of training images; receiving a confirmation that the machine learning model correctly identified the construction attributes for at least a majority of the second subset of training images; and implementing the machine learning model in response to receiving the confirmation.

In Example 29, the subject matter of Example 28 optionally includes, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

In Example 30, the subject matter of Examples 27-29 optionally includes, wherein the one or more knit parameters include at least one of a complexity and a courses to wales ratio in addition to one or more of: grams per square meter, wales per inch and courses per inch.

In Example 31, the subject matter of Example 30 optionally includes, wherein the complexity indicates if a back of a fabric is sufficiently complex that it can be used as a front of the fabric as measured by a number of knit stitches as compared to a number of tuck stitches plus a number of miss stitches.

In Example 32, the subject matter of Examples 29-31 optionally includes, wherein the shape structure on the microscale includes one or more of: a dash, a smile, a rectangle, a round, a diamond, a square, a triangle, a hexagon, a polygon, a dot, a zig zag and a diagonal stitch.

In Example 33, the subject matter of Examples 29-32 optionally includes, wherein the fabric structure at the macroscale includes one or more of: a checkerboard, a diamond board, checkers, a smooth, diamond checkers and a diagonal line.

Example 34 is a system for training a machine learning model to determine construction attributes of a knit fabric, the system comprising: at least one processor; and at least one memory storing instructions that, when executed by the at least one processor, cause the at least one processor to perform actions comprising: receive a first subset of training images of a first plurality of knit fabrics; extract one or more visual cues from each of the first subset of training images, wherein the one or more visual cues are at least some of the construction attributes of the first plurality of knit fabrics; map the one or more visual cues from each of the first subset of training images to a variable of the machine learning model; receive a second subset of training images of a second plurality of knit fabrics; extract one or more visual cues from each of the second subset of training images; evaluate the machine learning model using the one or more visual cues extracted from each of the second subset of training images; receive a confirmation that the machine learning model correctly identified the construction attributes for at least a majority of the second subset of training images; and implement the machine learning model in response to receiving the confirmation.

In Example 35, the subject matter of Example 34 optionally includes, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

In Example 36, the subject matter of Example 35 optionally includes, wherein the one or more knit parameters include at least one of a complexity and a courses to wales ratio in addition to one or more of: grams per square meter, wales per inch and courses per inch.

In Example 37, the subject matter of Example 36 optionally includes, wherein the complexity indicates if a back of a fabric is sufficiently complex that it can be used as a front of the fabric as measured by a number of knit stitches as compared to a number of tuck stitches plus a number of miss stitches.

In Example 38, the subject matter of Examples 35-37 optionally includes, wherein the shape structure on the microscale includes one or more of: a dash, a smile, a rectangle, a round, a diamond, a square, a triangle, a hexagon, a polygon, a dot, a zig zag and a diagonal stitch.

In Example 39, the subject matter of Examples 35-38 optionally includes, wherein the fabric structure at the macroscale includes one or more of: a checkerboard, a diamond board, checkers, a smooth, diamond checkers and a diagonal line.

Example 40 is a non-transitory computer readable storage device including instructions, which when executed by a machine, configure the machine to: receive input via a visual browser interface with search criteria, wherein the search criteria corresponds to visual cues that are construction attributes of a knit fabric; access an electronic database of a plurality of digital images of a plurality of knit fabrics, select, based upon the input and the search criteria, at least one of the plurality of digital images; and display the at least one of the plurality of digital images for review.

In Example 41, the subject matter of Example 40 optionally includes, wherein the visual cues are extracted from image analysis performed by an artificial intelligence (AI) system to generate and assign the visual cues to each of the digital images based on the image analysis.

In Example 42, the subject matter of Examples 40-41 optionally includes, wherein instructions, which when executed by a machine, configure the machine to: provide for selection of the at least one of the plurality of digital images based upon the review; and provide for placement of a purchase order for one or more fabric samples associated with the at least one of the plurality of digital images.

In Example 43, the subject matter of Examples 40-42 optionally includes, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

In Example 44, the subject matter of Example 43 optionally includes, wherein the one or more knit parameters include at least one of a complexity and a courses to wales ratio in addition to one or more of: grams per square meter, wales per inch and courses per inch.

In Example 45, the subject matter of Example 44 optionally includes, wherein the complexity indicates if a back of a fabric is sufficiently complex that it can be used as a front of the fabric as measured by a number of knit stitches as compared to a number of tuck stitches plus a number of miss stitches.

In Example 46, the subject matter of Examples 43-45 optionally includes, wherein the shape structure on the microscale includes one or more of: a dash, a smile, a rectangle, a round, a diamond, a square, a triangle, a hexagon, a polygon, a dot, a zig zag and a diagonal stitch.

In Example 47, the subject matter of Examples 43-46 optionally includes, wherein the fabric structure at the macroscale includes one or more of: a checkerboard, a diamond board, checkers, a smooth, diamond checkers and a diagonal line.

In Example 48, the subject matter of Examples 40-47 optionally includes, wherein instructions, which when executed by a machine, configure the machine to: provide for selecting one of the plurality of digital images; and display data regarding the knit fabric of the one of the plurality of digital images, wherein the data includes one or more of: colors used, fiber content, machine callout, wales per inch, thickness, grams per square meter, courses per inch, courses to wales ratio, indication of single knit or double knit, color appearance class, production history, haptic data and fiber data.

Example 49 is at least one machine-readable medium including instructions that, when executed by processing circuitry, cause the processing circuitry to perform operations to implement of any of Examples 1-48.

Example 50 is an apparatus comprising means to implement of any of Examples 1-48.

Example 51 is a system to implement of any of Examples 1-48.

Example 52 is a method to implement of any of Examples 1-48.

In the above Examples, the systems or methods of any one or any combination of the Examples can optionally be configured such that all elements or options recited are available to use or select from.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

The scope of the invention should be determined with reference to the appended claims, along with the full scope of equivalents to which such claims are entitled.

## Claims

1. A method of providing for search and review of an electronic database of knit fabric samples, the method comprising:
providing a plurality of digital images of a plurality of knit fabrics;
organizing the plurality of digital images in the database based upon corresponding visual cues extracted using an image analysis performed on each of the plurality of digital images, wherein the visual cues are construction attributes of the plurality of knit fabrics;
displaying one or more of the plurality of digital images for review; and
providing for search of the database using one or more of the visual cues.

2. The method of claim 1, wherein the organizing the plurality of digital images utilizes an artificial intelligence (AI) system to generate and assign the visual cues to each of the plurality of digital images based on the image analysis.

3. The method of any one of claims 1-2, further comprising:
allowing for selecting at least one of the one or more of the visual cues as search criteria;
searching the database based upon the search criteria; and
updating the displaying of the one or more of the plurality of digital images for review based upon the search criteria.

4. The method of any one of claims 1-3, further comprising:
allowing for selecting one of the plurality of digital images; and
displaying data regarding the knit fabric of the one of the plurality of digital images, wherein the data includes one or more of: colors used, fiber content, machine callout, wales per inch, thickness, grams per square meter, courses per inch, courses to wales ratio, indication of single knit or double knit, color appearance class, production history, haptic data and fiber data.

5. The method of any one of claims 1-4, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

6. The method of claim 5, wherein the one or more knit parameters include at least one of a complexity and a courses to wales ratio in addition to one or more of: grams per square meter, wales per inch and courses per inch.

7. The method of claim 6, wherein the complexity indicates if a back of a fabric is sufficiently complex that it can be used as a front of the fabric as measured by a number of knit stitches as compared to a number of tuck stitches plus a number of miss stitches.

8. The method of any one of claims 5-7, wherein the shape structure on the microscale includes one or more of: a dash, a smile, a rectangle, a round, a diamond, a square, a triangle, a hexagon, a polygon, a dot, a zig zag and a diagonal stitch.

9. The method of any one of claims 5-8, wherein the fabric structure at the macroscale includes one or more of: a checkerboard, a diamond board, checkers, a smooth, diamond checkers and a diagonal line.

10. The method of any one of claims 1-9, further comprising:
allowing for selecting one of the plurality of digital images; and
facilitating placing a purchase order for one or more of the fabric samples associated with the one of the plurality of digital images.

11. A system allowing for review of a digital representation of a knit fabric, the system comprising:
at least one processor; and
at least one memory storing instructions that, when executed by the at least one processor, cause the at least one processor to perform actions comprising:
access an electronic database of a plurality of digital images of a plurality of knit fabrics,
select, based upon a search criteria, one or more of the plurality of digital images having shared visual cues extracted using an image analysis performed on each of the plurality of digital images, wherein the visual cues are construction attributes of the plurality of knit fabrics; and
display the one or more of the plurality of digital images for review.

12. The system of claim 11, wherein the search criteria correspond to one or more of the visual cues.

13. The system of any one of claims 11-12, wherein the at least one processor performs further actions comprising:
allow for selection of at least one of the one or more of the plurality of digital images based upon the review; and
allow for placement of a purchase order for one or more fabric samples associated with the at least one of the one or more of the plurality of digital images.

14. The system of any one of claims 11-13, wherein the visual cues include at least two or more of: indication of front or back, a fabric color, a manufacturer assigned tag, a fabric texture and color, a fabric structure at a macroscale that provides a pattern, a column width, a column prominence, a row prominence, a shape structure on a microscale and one or more knit parameters.

15. The system of claim 14, wherein the one or more knit parameters include at least one of a complexity and a courses to wales ratio in addition to one or more of: grams per square meter, wales per inch and courses per inch, wherein the complexity indicates if a back of a fabric is sufficiently complex that it can be used as a front of the fabric as measured by a number of knit stitches as compared to a number of tuck stitches plus a number of miss stitches.
